(19) Europäisches Patentamt
European Patent Office
Office européen des brevets

(11) **EP 1 321 014 B1**

(12) **FASCICULE DE BREVET EUROPEEN**

(45) Date de publication et mention
de la délivrance du brevet:
**12.12.2012 Bulletin 2012/50**

(21) Numéro de dépôt: **01972176.0**

(22) Date de dépôt: **20.09.2001**

(51) Int Cl.:
*H05H 1/24* *(2006.01)*    *B01J 19/10* *(2006.01)*

(86) Numéro de dépôt international:
**PCT/FR2001/002934**

(87) Numéro de publication internationale:
**WO 2002/026004 (28.03.2002 Gazette 2002/12)**

(54) **DISPOSITIF DE PRODUCTION D'UN PLASMA, PROCEDE D'IONISATION, UTILISATIONS DU PROCEDE ET REALISATIONS METTANT EN OEUVRE LE DISPOSITIF SELON L'INVENTION**

VORRICHTUNG ZUR PLASMAERZEUGUNG, IONISATIONSVERFAHREN, VERFAHRENSVERWENDUNGEN UND VORRICHTUNG VERWENDENDE BEARBEITUNGEN

DEVICE FOR PRODUCING A PLASMA, IONISATION METHOD, USE OF SAID METHOD AND PRODUCTION PROCESSES USING SAID DEVICE

(84) Etats contractants désignés:
**AT BE CH CY DE DK ES FI FR GB GR IE IT LI LU MC NL PT SE TR**
Etats d'extension désignés:
**AL LT LV MK RO**

(30) Priorité: **22.09.2000 FR 0012107**

(43) Date de publication de la demande:
**25.06.2003 Bulletin 2003/26**

(73) Titulaire: **Clarq International (Societe Civile)
07260 Joyeuse (FR)**

(72) Inventeur: **CESA, Valentin
F-07110 Largentiere (FR)**

(74) Mandataire: **Nuss, Pierre et al
Cabinet Nuss
10 Rue Jacques Kablé
67080 Strasbourg Cedex (FR)**

(56) Documents cités:
**WO-A-96/23400    US-A- 4 419 329
US-A- 5 316 076**

• **DATABASE WPI Section Ch, Week 198938 Derwent Publications Ltd., London, GB; Class E36, AN 1989-276982 XP002169879 & SU 1 468 854 A (KUIBYSHEV POLY), 30 mars 1989 (1989-03-30)**

**Description**

La présente invention concerne le domaine de la transformation de la matière et a pour objet un dispositif de production d'un plasma à partir d'une réaction de combustion d'une matière ou d'un mélange de matières M, un procédé d'ionisation ou de transformation de la matière utilisant ce dispositif, des utilisations du procédé selon l'invention ainsi que des réalisations mettant en oeuvre le dispositif selon l'invention.

A ce jour on ne connaît que le procédé d'agitation thermique pour construire une réaction de combustion. Ce procédé consiste à mélanger intimement le combustible avec le comburant et à agiter le mélange par une contrainte thermodynamique, c'est-à-dire augmenter l'entropie ou le désordre de ce mélange pour augmenter les probabilités de rencontres efficaces entre les entités mises en réaction. Les combustibles solides sont alors eux-mêmes soumis au flux turbulent de l'air comburant.

Le domaine des combustions pulsatoires tendrait à procéder autrement au sein d'un flux stationnaire. Mais ce cas, qui échappe à la description classique, ne fonctionne parfaitement qu'aux basses fréquences du flux pulsant compatibles avec la vitesse de propagation ondulatoire du front d'inflammation. Au-delà, les turbulences dues aux fréquences plus élevées génératrices d'entropie détruisent la cohérence entre la procédure thermique et le système stationnaire, les rendements baissant rapidement jusqu'au point où la flamme décroche.

Comme conséquence de l'incohérence due à l'agitation thermique, la probabilité de rencontre entre particules est faible et toutes les collisions ne sont pas efficaces. Parmi les rencontres, celles qui sont effectivement efficaces ont une amplitude de mouvement faible qui conduit seulement à une ionisation momentanée suivie d'une oxydation reformant des espèces chimiques liées. Ce type de réaction crée des résidus imbrûlés et des oxydes qui nuisent de plus en plus à l'atmosphère terrestre.

Dans ces conditions, la production d'énergie par combustion nécessite d'opérer un choix entre la production de quantités de résidus imbrûlés ou le rejet de produits d'oxydation nocifs.

Les dispositifs statiques soumis aux pulsations des conduits de fumées qui engendrent des baisses de fréquences par battement dans les chambres de combustion produisent beaucoup de résidus imbrûlés. Ainsi, il est fréquent de boucher un conduit de fumées en trois semaines d'utilisation.

Le couple de puissance des moteurs thermiques dont le rendement est faible par rapport aux capacités énergétiques des combustibles chute rapidement quand la vitesse mécanique dépasse un certain seuil de corrélation avec la vitesse de réaction, laquelle est caractérisée par la propagation du front de flamme. On doit alors avoir recours à des combustibles possédant des vitesses cinétiques améliorées, ce qui augmente en contrepartie la production d'oxydes d'azote et ce, proportionnellement à la température de combustion.

Cette plage de validité est encore plus réduite dans les brûleurs pour lesquels les réglages sont très pointus, d'une part, pour stabiliser les flammes et, d'autre part, pour choisir le meilleur rendement compte tenu du dilemme existant entre la production de résidus imbrûlés et le rejet de produits d'oxydation. On est donc condamné à un équilibre entre la limitation des résidus imbrûlés et celle de la production d'oxydes tout aussi nocifs les uns que les autres et avec les conséquences que l'on connaît.

Le problème devient encore plus complexe dans les installations industrielles. En effet, il est difficile de maîtriser l'évolution turbulente d'une flamme de grand volume, surtout lorsque l'on utilise simultanément plusieurs injecteurs. La grande différence de température entre le coeur (ou dard) et la périphérie d'une flamme de grand volume tend à diminuer la qualité de la combustion et l'échange périphérique de chaleur. Pour ces raisons on est conduit à utiliser plusieurs brûleurs dans les fours industriels. Dans ce cas, c'est le volume qui devient le facteur limitant.

Le problème rencontré dans le cadre de la présente invention résulte de la procédure d'agitation thermique proprement dite qui entretient d'autant plus l'incohérence du milieu de réaction que les conditions thermodynamiques sont éloignées de l'état standard. Dès lors, les ruptures des molécules de combustibles et leur comportement de particules libres est totalement aléatoire. Le front de flamme constitue la seule frange de cohérence dans le milieu agité de la réaction. La propagation de cette dernière dans un milieu Brownien suppose un mouvement d'organisation de cohérence qui le précède et un mouvement de décohérence qui le suit, lesquels sont générateurs de turbulences qui sont autant d'énergie de mouvement perdue.

Pour les combustibles usuels, il existe selon leur nature une vitesse moyenne de propagation de cet espace de cohérence ondulatoire qui est liée à une plage ou à un domaine de compatibilité avec les fréquences des phénomènes pulsatoires développées par les réacteurs. En dehors de cette plage de correspondance harmonique, il y a interférence destructive entre les deux capacités. Ainsi, une fréquence inférieure produit des résidus imbrûlés et un rendement médiocre. A l'inverse, un excès de pression du flux dans les brûleurs fait décrocher la flamme qui devient instable. Dans les moteurs, une vitesse élevée conduit ainsi au cliquetis, la matière évoluant localement de manière indépendante par rapport au système.

Le coeur du problème réside dans l'étendue de la marge de cohérence entre les propriétés vibratoires propres de la matière mise en réaction et les phénomènes pulsants et turbulents développés indépendamment par les réacteurs. La solution idéale réside dans la réalisation d'un réacteur aux propriétés pulsatoires cohérentes, constantes, entretenues et bien maîtrisées en plein accord ou harmonique du comportement vibratoire organisé et cohérent de la matière pendant la continuité de sa transformation, tout principalement dans le processus de rencontre des réactifs.

Il est également connu que dans un écoulement stationnaire les conditions acoustiques imposent aux particules en mouvement une cohérence d'état et de direction. Ainsi, dans une région de « noeuds » la matière est immobile alors qui dans les régions où existent des « ventres », les amplitudes sont maximales et sont donc les mêmes pour tous les points du voisinage. D'autre part, les mouvements oscillatoires de tous ces points sont synchrones et les distances de ces points restent sensiblement invariables. Par expérience, on sait également qu'un écoulement stationnaire macroscopique dans un tuyau transporte la condition microscopique de pression acoustique (cf. tous les instruments de musique à vent).

Le document WO 96/23400 A2 décrit un dispositif et un procédé destinés à concentrer de l'énergie pour produire des conditions de vitesses, de pressions et de températures élevées à l'intérieur d'un conteneur muni d'une chambre de résonance. L'énergie nécessaire pouvant conduire à des conditions de fusion est apportée par des ondes vibratoires issues de transducteurs soniques.

Toutefois, cet arrière-plan technologique ne divulgue pas l'utilisation d'une chambre supplémentaire acoustique séparée qui est couplée à une chambre à solitons de volume réglable, elle-même également séparée, et dans laquelle une arrivée d'air réglable combinée à un organe d'aspiration pulsante permet la production de la matière ionisée.

La présente invention a pour objet de fournier des dispositifs conformés pour mettre en oeuvre les propriétés des écoulements stationnaires véhiculant une condition acoustique de façon à construire un système de réaction dans lequel toutes les particules libres adoptent un comportement cohérent soumis aux lois de l'acoustique.

Les physiciens tels que Einstein, Debye, Born, von Karman, Tarassov et autres qui se sont penchés sur les propriétés de la matière ont émis l'hypothèse d'une évolution harmonique. Cependant, celle-ci ne peut être retenue dans le cas du mouvement Brownien qui caractérise l'état gravitationnel. C'est pourquoi, comme il sera dit par la suite, les moyens de la présente invention visent à développer les forces d'interactions de Van der Waals qui réduisent les effets gravitationnels au moment des dissociations de la matière de sorte que leur conditionnement harmonique et cohérent devienne possible.

Les dispositifs selon la présente invention ont pour fonction de créer, d'une part, les conditions de cohérence et d'orientation pour lesquelles des espèces dissociées ou semi-dissociées sont amenées à constituer un champ de matière macroscopique cohérent, orienté et stationnaire comportant des phases de fortes condensations suivies de dilatations (condensations de BOSE EINSTEIN), d'autre part, créer les conditions de pérennité du champ ainsi conditionné par l'addition d'un ou d'autres champs en opposition de phase, compensateurs de l'état hors équilibre thermodynamique, la somme des mouvements de l'ensemble contribuant alors à la formation d'une onde soliton possédant les propriétés de conservation requises dues à un faible amortissement. Ce conditionnement est remarquable en ce que ladite onde stationnaire présente des plans nodaux favorables au renforcement relativiste de l'accélération cinétique, laquelle accélération conduit à l'ionisation des espèces génératrice d'une flamme cohérente et par voie de conséquence, ayant les caractéristiques d'un faisceau laser mais dont la propagation macroscopique obéit au comportement stationnaire de basse fréquence.

Les conséquences remarquables sont, d'une part, un meilleur rendement par quantité de mouvement du champ ionisé et, d'autre part, une suite de dilatations stationnaires qui donnent lieu à des surfaces d'échanges successives utilisables en chaleur, comme en pression.

Par ailleurs, la présente invention permet également une mise en oeuvre simple autorisant l'utilisation de réacteurs de dimensions industrielles en raison de la longueur de la flamme et de son isotropie, et peut ainsi être appliquée à de grands fours. L'absence de produits d'oxydation en raison de l'ionisation totale est une conséquence avantageuse pour l'environnement, avantage qui permet de traiter, pratiquement sans limitation, de manière inoffensive et économiquement rentable de nombreux déchets solides ou liquides, sans que l'on soit pour autant limité à ces derniers.

La présente invention a notamment pour but de pallier les inconvénients précités.

A cet effet, la présente invention a pour objet un dispositif de production d'un plasma à partir d'une réaction de combustion d'une matière ou d'un mélange de matières M, selon la revendication 1.

L'invention a également pour objet un procédé d'ionisation ou de transformation de la matière utilisant un dispositif selon l'invention, tel que revendiqué à la revendication 40.

La présente invention a encore pour objet différentes utilisations du procédé ainsi que différents objets mettant en oeuvre le dispositif selon l'invention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en coupe latérale simplifiée du dispositif général de la présente invention ;
les figures 2 à 7, 9, 11 et 12 sont des vues analogues à celle de la figure 1 de neuf autres modes de réalisation du dispositif selon la présente invention, et

les figures 8 et 10 sont des vues en coupe frontale simplifiées des dispositifs selon les figures 7 et 9. .

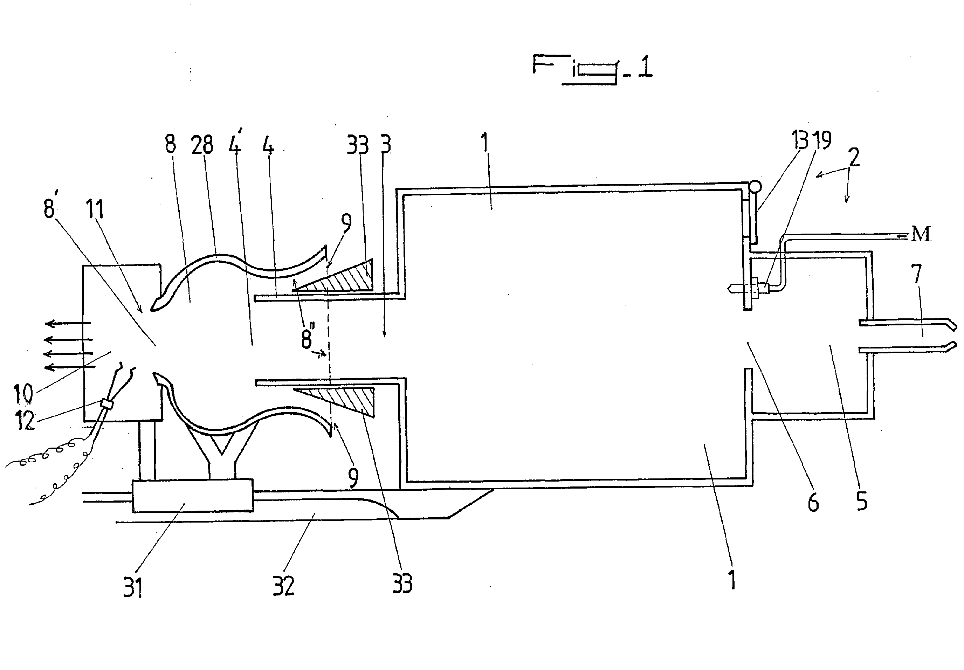

La figure 1 des dessins annexés représente une vue simplifiée du dispositif général de la présente invention, c'est-à-dire un dispositif de production d'un plasma à partir d'une réaction de combustion d'une matière ou d'un mélange de matières M selon la présente invention qui est caractérisé en ce qu'il comprend :

- une chambre de résonance 1 de type cavité de « Fabry-Perot » destinée à créer une circulation stationnaire d'un flux de ladite ou desdites matières M pénétrant dans ladite chambre de résonance 1 par au moins un moyen d'alimentation 2 et quittant la chambre de résonance 1 sous une forme conditionnée, à savoir dans un état vibratoire stationnaire, cohérent et semi-condensé, par au moins une sortie 3 en forme de conduite(s) allongée(s) 4,
- une chambre acoustique 5 communiquant avec ladite chambre de résonance 1 par l'intermédiaire d'un orifice 6 et munie d'un dispositif acoustique 7 générateur d'harmoniques modulables, et
- une chambre à solitons 8 de volume réglable, destinée à recevoir la matière conditionnée sortant par la ou les conduites allongées 4 de la chambre de résonance 1 en même temps qu'elle génère vers cette chambre de résonance 1, par ladite ou lesdites conduites allongées 4, une recirculation d'air extérieur, ladite chambre à solitons 8 étant munie d'au moins une arrivée d'air 9 à débit réglable et ladite chambre à solitons 8 définissant, avec un organe d'aspiration pulsante 10 adjacent à la sortie de ladite chambre à solitons 8, un espace 11 de production de matière ionisée.

Comme le montre la figure 1, la chambre de résonance 1 est constituée d'un volume cylindrique allongé, aux extrémités génératrices de réflexions tel une cavité de «Fabry-Perot». Cette chambre de résonance 1 est conformée pour favoriser les circulations stationnaires réfléchies d'un flux saturé de matière(s) M en suspension, conditionnée(s), ainsi que pour entretenir des vibrations longitudinales renforcées par le concours de l'orifice 6 reliant ladite chambre de résonance 1 avec la chambre acoustique 5.

Les matières M à conditionner entrent à l'intérieur de la chambre de résonance 1 par un ou plusieurs moyens d'alimentation 2 et en ressortent conditionnées pour la réaction qui suit par l'intermédiaire d'au moins une sortie 3, par exemple une sortie 3 réalisée sous la forme d'un col.

Selon une caractéristique de l'invention, le ou les moyens d'alimentation 2 en matière(s) M de la chambre de résonance 1 consistent en au moins une ouverture d'alimentation 13 réalisée dans ladite chambre de résonance 1. Une ouverture vers le fond de la chambre de résonance 1 ou sur le fond même, permet de faire entrer ou d'injecter les matières M selon qu'elles sont solides, liquides ou gazeuses. Les différents modes de réalisation du ou des moyens d'alimentation 2 seront décrits plus loin.

Dans le mode de réalisation illustré à la figure1, les matières conditionnées sortent de la chambre de résonance 1 par une sortie 3 unique réalisée sous la forme d'une conduite allongée 4 ouverte à ses deux extrémités pour former un col de résonateur. Cette conduite allongée 4 présente une section réduite par rapport à la section de la chambre de résonance 1, de sorte que le rapport des sections (facteur d'impédance) reste dimensionné pour faciliter une double circulation engendrée, dans un sens par l'organe d'aspiration pulsante 10 et, en contresens par la dépression que ledit organe d'aspiration pulsante 10 crée dans ladite chambre de résonance 1.

La longueur de la ou des conduites allongées 4 est fonction des dispositions de réglage de la distance existant entre la ou les extrémités 4' de ladite ou desdites conduites allongées 4 et la première ouverture 8' de la chambre à solitons 8 dans laquelle elle(s) débouche(nt) librement, ou encore de la conformation de l'organe d'aspiration pulsante 10, pourvu que ce dernier résonne en demi longueur d'onde.

Selon une caractéristique de l'invention, la ou les conduites allongées 4 sont de longueurs réglables, par exemple en étant réalisées sous la forme de tronçons télescopiques. D'autres moyens d'adapter la longueur de ladite ou desdites conduites allongées 4 sont également possibles, par exemple des tronçons reliés par des soufflets extensibles. De tels tronçons peuvent notamment faciliter la mise en marche du dispositif général selon l'invention, servir à affiner les paramètres de réglages ou encore le nettoyage rapide de la ou des conduites allongées 4 pendant le fonctionnement dudit dispositif.

Comme précédemment évoqué et selon une autre caractéristique de l'invention, la section de la ou des conduites allongées 4 est inférieure à celle de la chambre de résonance 1 et supérieure à celle d'une première ouverture 8' de la chambre à solitons 8 qui est reliée à l'organe d'aspiration pulsante 10, de sorte que le flux de matières M, qui tend à avoir la section de ladite première ouverture 8', laisse au moins un espace annulaire pour l'introduction dans la ou les conduites allongées 4 de l'onde réfléchie constituée de l'air introduit par au moins une arrivée d'air 9 dans la chambre à solitons 8, lequel air remonte dans ladite ou lesdites conduites allongées 4 en direction de la chambre de résonance 1.

Selon encore une autre caractéristique, la fréquence propre de la ou des conduites allongées 4 est choisie de manière à ce qu'elle résonne sur la fréquence fondamentale de l'onde circulante dans la chambre de résonance 1 et de manière à ce que l'onde réfléchie dirigée de la sortie de la ou des conduites allongées 4 vers la chambre de résonance 1 vienne composer un mode commun avec l'onde incidente pour favoriser le battement.

La chambre acoustique 5 est constituée d'un volume de résonance acoustique relié de manière étanche par un orifice 6 à la chambre de résonance 1 et munie du côté opposé à cet orifice 6 d'un dispositif acoustique 7 réglable. Selon une caractéristique de l'invention, le dispositif acoustique 7 est un ajutage acoustique ou une anche acoustique, par exemple un dispositif du type flûte à ouverture variable ou un dispositif à anche libre dont l'espace libre est réglable.

Les dimensions et la forme de cette chambre acoustique 5 sont adaptées au dispositif qu'elle équipe ou à son implantation sous réserve de la distance entre le pincement au niveau de l'orifice 6 et l'organe acoustique 7, facteur $n^{ième}$ des harmoniques des pulsations, accordé par rapport à la distance existant entre la ou les sorties 3 et l'organe acoustique 7.

Ainsi, selon une caractéristique de l'invention, les dimensions et la forme de la chambre acoustique 5 sont fonction de la distance entre ledit orifice 6 et ledit dispositif acoustique 7, cette distance étant elle-même accordée à la distance entre la ou les sorties 3 de ladite chambre de résonance 1 et ledit dispositif acoustique 7.

De manière avantageuse, la distance entre ledit orifice 6 et ledit dispositif acoustique 7 est un sous-multiple entier de la distance entre la ou les sorties 3 de ladite chambre de résonance 1 et ledit dispositif acoustique 7.

Selon une autre caractéristique de l'invention, l'orifice 6, le dispositif acoustique 7 et une sortie 3 de la chambre de résonance 1 sont alignés.

Comme représenté notamment sur la figure 1, la chambre à solitons 8 est située entre l'organe d'aspiration pulsante 10 et la sortie 3 de la chambre de résonance 1.

Selon un premier mode de réalisation la chambre à solitons 8 présente une forme cylindrique ou quasi-cylindrique 27 comportant une première ouverture 8' pour le raccordement à l'organe d'aspiration pulsante 10 et une seconde ouverture 8" s'emboîtant sur la ou les conduites allongées 4 de la chambre de résonance 1 de manière à ce que l'espace restant entre ladite seconde ouverture 8" et ladite ou lesdites conduites allongées 4 forme au moins une arrivée d'air 9 pour ladite chambre à solitons 8.

Selon un second mode de réalisation, la chambre à solitons 8 présente sensiblement une forme de cloche 28 évasée comportant, d'une part, une première ouverture 8' du côté du renflement destinée au raccordement à l'organe d'aspiration pulsante 10 et, d'autre part, une seconde ouverture 8" plus ou moins recourbée s'emboîtant sur la ou les conduites allongées 4 de la chambre de résonance 1 de manière à ce que l'espace restant entre ladite seconde ouverture 8" et ladite ou lesdites conduites allongées 4 forme au moins une arrivée d'air 9 pour ladite chambre à solitons 8.

Selon une caractéristique de l'invention, la seconde ouverture 8" de la chambre à solitons 8 est prolongée du côté de la ou des conduites allongées 4, par un manchon 29 de section supérieure à celle de la ou des conduites allongées 4 et de longueur égale à la moitié de la longueur de la ou des conduites allongées 4, ledit manchon 29 étant positionné de manière fixe sur l'extrémité terminale libre de ladite ou desdites conduites allongées 4, l'espace libre entre ledit manchon 29 et ladite ou lesdites conduites allongées 4 formant au moins une arrivée d'air 9 pour ladite chambre à solitons 8.

Selon une variante, la seconde ouverture 8" de la chambre à solitons 8 est prolongée du côté de la ou des conduites allongées 4, par un manchon 29 de section supérieure à celle de la ou des conduites allongées 4 et de longueur égale à la moitié de la longueur de la ou des conduites allongées 4, ledit manchon 29 étant positionné de manière mobile sur l'extrémité terminale libre de ladite ou desdites conduites allongées 4, l'espace libre entre ledit manchon 29 et ladite ou lesdites conduites allongées 4 formant au moins une arrivée d'air 9 pour ladite chambre à solitons 8 et la seconde ouverture 8" plus ou moins recourbée de la chambre à solitons 8 coulissant à frottement sur ledit manchon 29.

Selon une autre caractéristique particulièrement importante, la chambre à solitons 8 est mobile par rapport à la chambre de résonance 1.

Avantageusement, l'organe d'aspiration pulsante 10 est donc mobile par rapport à la chambre à solitons 8, l'espace entre ladite chambre à solitons 8 et ledit organe d'aspiration pulsante 10 formant une partie d'un dispositif accélérateur de débit 30 à ouverture variable.

Comme il sera expliqué plus en détail ci-après, le dispositif selon l'invention est encore caractérisé en ce que la chambre de résonance 1, la chambre à solitons 8 et/ou l'organe d'aspiration pulsante 10 sont montés sur un ou plusieurs chariots 31 qui se déplacent le long d'au moins un rail 32.

Selon une autre caractéristique, le dispositif selon l'invention comporte un moyen de formation d'un mouvement d'aspiration circulaire rotatif, tangentiel orienté, générateur d'une accélération toroïdale du flux transitant par le dispositif accélérateur de débit 30.

La ou les conduites allongées 4 de la chambre de résonance 1 présentent, sur leurs pourtours extérieurs, des éléments 33 ayant une surface extérieure qui augmente en direction de la chambre de résonance 1, de manière à ce que l'espace existant entre les parois de la seconde ouverture 8" ou celles de son prolongement par le manchon 29 et la surface extérieure desdits éléments 33 diminue lorsque ladite seconde ouverture 8" ou ledit manchon 29 se rapproche desdits éléments 33, permettant ainsi de réguler le débit d'air entrant dans les arrivées d'air 9.

De façon préférée, la surface extérieure des éléments 33 est de forme complémentaire à celle de la seconde ouverture 8" plus ou moins recourbée ou à celle du manchon 29.

Dans une variante, les éléments 33 sont montés de façon mobile sur la ou les conduites allongées 4, par exemple, par coulissement ou rotation autour d'une vis hélicoïdale.

La profondeur de l'emboîtement de la seconde ouverture 8", éventuellement prolongée par le manchon 29, sur la ou les conduites allongées 4 est réglable par l'intermédiaire du déplacement de la chambre à solitons 8, du manchon 29 et/ou des éléments 33, afin de contrôler la réaction d'ionisation de la ou des matières M la variation de la profondeur dudit emboîtement permettant d'adapter la condition de phase de l'air entrant par les arrivées d'air 9, de sorte que ledit flux d'air soit en opposition de phase par rapport au flux de matières M extrait de la chambre de résonance 1.

La figure 1 des dessins annexés représente un exemple non limitatif de réalisation simplifié d'un dispositif selon l'invention, dans lequel la chambre à solitons 8 de forme ovoïde comporte une première ouverture 8' (côté renflement) qui est destinée au raccordement étanche de ladite chambre à solitons 8 à l'organe d'aspiration pulsante 10 et une seconde ouverture 8" (côté effilé) située à l'opposé de la première ouverture 8'.

La chambre à solitons 8 illustrée est reliée à l'atmosphère extérieure par une ou plusieurs arrivées d'air 9 et possède principalement deux fonctions à savoir, d'une part, celle de recevoir la sortie 3 de la chambre de résonance 1 qui pénètre plus ou moins profondément, par la conduite allongée 4, à l'intérieur de la chambre à solitons 8 , le réglage de la distance entre la sortie 3 (ou l'extrémité 4' de la conduite allongée 4) et la première ouverture 8' de ladite chambre à solitons 8 permettant de régler et de contrôler la réaction en jouant sur la position du chariot 31 sur le rail 32 et, d'autre part, grâce aux arrivées d'air 9 de faire entrer un flux d'air en condition d'opposition de phase par rapport au flux extrait de la chambre de résonance 1.

La chambre à solitons 8 est conformée de telle manière que l'entrée réglable des arrivées d'air 9 se situe impérativement et de manière immuable au niveau d'un plan nodal du dispositif tel que, par exemple, un plan nodal de la conduite allongée 4 résonant en demi longueur d'onde, un des plans nodaux de l'une des chambres de résonance 1 ou acoustique 5, etc.

Selon une variante, l'arrivée d'air 9 par la seconde ouverture 8" de la chambre à solitons 8 est alimentée de manière étanche par au moins une conduite qui prend son origine à l'un des points nodaux du dispositif.

La quantité d'air qui entre dans la chambre à solitons 8 par l'inteimédiaire des arrivées d'air 9 doit permettre à la recirculation « soliton » par la conduite allongée 4 de compenser et de contrôler la dépression régnant dans la chambre de résonance 1.

Le rail 32 supporte le chariot 31,dont le déplacement latéral permet le réglage de la distance entre la sortie de la chambre à solitons 8 au niveau de la première ouverture 8' et l'extrémité 4' de la conduite allongée 4. Le rail 32 peut être solidaire de la chambre de résonance 1, la chambre à solitons 8 associée à l'organe d'aspiration pulsante 10 étant fixés sur le chariot 31 qui coulisse latéralement sur ledit rail 32.

Dans une variante, c'est le rail 32 qui est solidaire de l'organe d'aspiration pulsante 10 et de la chambre à solitons 8 associés et c'est la chambre de résonance 1 qui est fixée de manière mobile sur un chariot 31.

Selon une autre caractéristique, le dispositif selon la présente invention est caractérisé en ce qu'il comporte, en outre, au moins un moyen d'assistance à l'allumage 12 de la ou des matières M conditionnées dans l'espace 11 de la chambre à solitons 8.

Tout dispositif, statique ou mécanique, capable de provoquer une aspiration dans des conditions pulsatoires, équipé ou non d'un moyen d'assistance à l'allumage 12 quelconque, est apte à être accouplé à la première ouverture 8' de la chambre à solitons 8 pour activer le dispositif selon l'invention mettant en oeuvre le procédé de transformation de la matière, également objet de la présente invention.

Comme organe d'aspiration pulsante 10 on peut citer, à titre d'exemples non limitatifs, des dispositifs statiques (conduit statique de fumées 34, un ensemble de déflecteurs 35 d'un pulsoréacteur 36), des dispositifs mécaniques (dispositif accélérateur de débit 30 à ouverture variable actionné par un dispositif du type ventilateur ou une turbine soufflante 37, une turbine à gaz 38 dont le premier aubage 39, accolé à la première ouverture 8' de la chambre à solitons 8, produit une aspiration pulsante, au moins un moteur à explosion 41, 42 ou des dispositifs mixtes (statoréacteur).

Dans le cas d'un moteur à explosion 41 42, le moyen d'assistance à l'allumage 12 de la matière M conditionnée dans l'espace 11 sera préférentiellement celui du moteur à explosion 41, 42.

Le principe de fonctionnement du dispositif général selon l'invention (figure 1) est le suivant : on raccorde la première ouverture 8' de la chambre à solitons 8 à un ou plusieurs organes d'aspiration pulsante 10 munis, le cas échéant, de leurs propres moyens d'allumage ou d'assistance à l'allumage 12 (par ex. à électrodes ou à bougies) et équipés d'un réglage du débit. On met ensuite en marche l'organe d'aspiration pulsante 10 (y compris, le cas échéant son moyen d'assistance à l'allumage 12) et on fait entrer la ou les matières M dans la chambres de résonance 1 par le ou les moyens d'alimentation 2. La matière ou le mélange de matières M est conditionné sous la forme d'un champ de matières (nuage ou brouillard) dans un état vibratoire stationnaire, cohérent et semi-condensé.

A la suite de plusieurs allées et venues dans la chambre de résonance 1, le champ de matières est aspiré à travers la sortie 3 dans la conduite allongée 4, et additionné au flux d'air pénétrant de l'extérieur par les arrivées d'air 9 dans la chambre à solitons 8. Ensuite, le champ de matières contracté parvient à la première ouverture 8' de la chambre à solitons 8, où, additionné au flux d'air, il est soumis à une impulsion de vitesse. Cette vitesse amplifiée localement par le vide causé par le moyen d'allumage ou d'assistance à l'allumage 12 entraîne l'ionisation générale du champ accéléré. Le ventre de vitesse du champ ionisé génère un vide au droit de ladite première ouverture 8' qui est responsable d'une augmentation de la vitesse et qui dès lors ionise toutes les matières qui transitent par cette première ouverture 8'.

On éteint l'allumeur ou le moyen d'assistance à l'allumage 12 devenu inutile, la réaction d'accélération se poursuivant en entretenant la flamme à condition que l'approvisionnement de la chambre de résonance 1 en matières M soit assuré.

Pour faciliter l'allumage on ouvre totalement le réglage du dispositif acoustique 7. L'accélérateur de débit 30 est réglé au plus bas en corrélation avec le débit d'air dû aux arrivées d'air 9 de la chambre à solitons 8 largement ouvertes et avec le débit à travers la première ouverture 8' dirigé vers l'extrémité 4' de la conduite allongée 4. Dès que la matière apparaît sous forme de brouillard au niveau de la première ouverture 8', on referme progressivement le passage d'air dans le dispositif acoustique 7, de sorte à faire monter progressivement l'intensité de la dépression en même temps que s'établit le régime pulsatoire.

On suit la progression de la flamme rayonnante par des manoeuvres appropriées telles que le réglage du dispositif acoustique 7 vers son point de fonctionnement minimum, l'augmentation de la distance entre la première ouverture 8' et l'extrémité 4' de la conduite allongée 4, l'ajustage du débit des arrivées d'air 9 et la montée en puissance de l'organe d'aspiration pulsante 10 jusqu'à établir le bon débit qui correspond à la vitesse de conditionnement dans la chambre de résonance 1.

En effet, si la vitesse d'écoulement au niveau de l'accélérateur de débit 30 ou «Venturi» est trop lente par rapport à la vitesse de conditionnement dans la chambre de résonance 1, le champ de particules est saturé et plus lourd, l'impulsion de vitesse au niveau de la première ouverture 8' insuffisante laissant apparaître au contrôle des $C_xH_y$ imbrûlés.

Si au contraire la dépression appliquée par ledit «Venturi» est trop élevée, ou que l'arrivée d'air est trop restreinte, le renforcement des amplitudes de contraction dues à la libération d'hydrogène est mal compensé et la piézoélectricité se remarque par l'apparition de $SO_2$ et d'oxydes d'azote $NO_x$. Le défaut peut être le seul fait d'un déficit en oxygène (mesuré dans les rejets) imputable, dans ce cas, à l'ouverture des arrivées d'air 9 et à la force appliquée par le «Venturi», laquelle doit rester assez forte pour favoriser la réflexion des ondes sous la forme d'une recirculation qui soit de nature à compenser la dépression dans la chambre de résonance 1.

Une fois la matière M introduite dans la chambre de résonance 1 et mise en suspension, elle est soumise à l'état vibratoire et circule depuis le centre selon un parcours induit par les conditions acoustiques comme détaillé ci-après.

L'aspiration pulsante due à l'organe d'aspiration pulsante 10 qui est transmise successivement depuis la première ouverture 8' à la chambre à solitons 8, à la conduite allongée 4 et à la chambre de résonance 1, est génératrice de la propagation d'un mouvement stationnaire circulant qui conditionne l'atmosphère de cette chambre de résonance 1.

L'aspiration transmise par la conduite allongée 4 engendre une dépression au niveau de la paroi opposée, laquelle se retransmet jusqu'à la l'extrémité 4' de la conduite allongée 4 dans la chambre à solitons 8 où elle est réfléchie à nouveau en sens inverse de la pression transmise par le flux d'air recirculant compensateur de la dépression engendrée initialement dans la chambre de résonance 1. Puis, cette onde de réflexion revient buter à nouveau sur le fond opposé à la conduite allongée 4.

La chambre de résonance 1, telle une cavité de « Fabry-Perot », entretient de multiples réflexions de cette circulation du gaz ou brouillard formé de la saturation des espèces en suspension, lesdites réflexions étant favorisées par l'impédance découlant du rapport des sections entre la conduite allongée 4 et ladite chambre de résonance 1.

La dépression incidente est réfléchie par les parois de la chambre de résonance 1, sauf au niveau de l'orifice 6 où elle se transmet à la chambre acoustique 5 jusqu'au dispositif acoustique 7 où elle entre en contact avec l'atmosphère extérieure à pression standard. La pression atmosphérique tend alors à vouloir rétablir l'équilibre dans la chambre acoustique 5 en introduisant une pression qui active au passage le dispositif acoustique 7, lequel entre en résonance.

Les vibrations du dispositif acoustique 7 sont entretenues par la pulsation de la chambre de résonance 1, elle-même entretenue par l'aspiration venue de l'organe d'aspiration pulsante 10 à travers la conduite allongée 4. Tout se passe comme si la pulsation entretenue entre la conduite allongée 4 et le dispositif acoustique 7 correspondait à une corde qui serait pincée au niveau de l'orifice 6. La pulsation macroscopique de la chambre de résonance 1 transporte ainsi les vibrations microscopiques réfléchies à la suite du pincement au niveau de l'orifice 6 sous forme d'harmoniques de haute fréquence résultant de sa propre action sur la chambre acoustique 5, de manière analogue à la circulation d'un flux d'air qui transporte le son produit par l'embouchure d'un instrument de musique à vent.

Le flux stationnaire circulant dans la chambre de résonance 1 transporte donc en son sein des vibrations acoustiques de fréquences élevées dont les oscillations cohérentes sont des harmoniques de la pulsation macroscopique générale. Les mouvements des particules transportées par ce flux sont donc cohérents en position et en direction comme dans un mouvement stationnaire général dans lequel la mise en pression $\Delta P_B$ qui résulte d'une mise en vitesse u vaut :

$$\Delta P_B = \tfrac{1}{2}\,\rho_0.u^2 \quad \text{(loi de Bernoulli)}$$

où $P_B$ représente la pression dans un écoulement classique, $\rho_0$ représente la masse volumique et $u$ la vitesse acoustique, c'est-à-dire la vitesse de la particule au passage de la perturbation.

On sait que la pression acoustique $\Delta P_A$ est autrement supérieure à celle qui résulte d'une détente ou d'une compression stationnaire d'un écoulement classique à la même vitesse.

En posant $M = \dfrac{u}{Co}..$ (nombre de Mach)

avec Co = vitesse du son dans le milieu (gaz) considéré
et sachant que la pression acoustique $\Delta P_A$ résultant d'une même prise de vitesse vaut : $\Delta P_A = \rho_0.$ Co. $u$ on tire :

$$\Delta P_A / \Delta P_B = 2Co/u = 2/M$$

Pour $M$ = 0,005, ce rapport vaut 40, c'est-à-dire que la pression acoustique est 40 fois supérieure à celle qui résulte d'une détente ou d'une compression stationnaire à la même vitesse.

Commue l'atmosphère de la chambre de résonance 1 soumise à l'aspiration de l'organe d'aspiration pulsante 10 est maintenue en état de dépression, les pulsations acoustiques de pression sont absorbées par cet état. Par contre les pulsations de contraction augmentent momentanément la dépression de la chambre de résonance 1, se renforcent et tendent à produire un effet de battement sollicitant l'ensemble du volume de la chambre de résonance 1. Toutes les particules ou groupes de particules présents sous la forme d'agrégats en suspension et qui sont soumis à ces pulsations harmoniques orientées dans le sens de contraction adoptent un mouvement de précession et tendent à se condenser. Sous cet effet et celui du battement, leur comportement devient cohérent avec la phase de l'écoulement stationnaire qui les transporte, en direction et en position. La cohérence, l'orientation générale en direction ainsi que le renforcement de la masse des agrégats consécutifs à la contraction supposent une absorption de l'énergie du milieu notamment de la chaleur nécessaire à la stabilisation momentanée et au développement des forces de Van der Waals qui priment sur les autres interactions et confèrent au champ de particules son indépendance vis-à-vis de l'état gravitationnel environnant.

Comme l'atmosphère de la chambre de résonance 1 est seulement alimentée en air par l'intermédiaire du dispositif acoustique 7 et par la recirculation ou reflux provenant de la conduite allongée 4 de manière stationnaire, il est important de contrôler la pression de la chambre de résonance 1, de sorte que les conditions de transformation restent réductrices tout en maintenant une pression dont la valeur est très voisine de celle de la pression atmosphérique.

En effet, les ruptures des liaisons moléculaires libèrent des atomes d'hydrogène, lesquels absorbent une grande quantité de chaleur pour évoluer vers l'état gazeux. Ce processus renforce fortement les amplitudes de contraction et conduit à une cristallisation d'agrégat qui est génératrice d'effets piézoélectriques destructeurs de cohérence si la dépression initiale est trop forte.

La chambre à solitons 8 munie des arrivées d'air 9 doit jouer le rôle de régulateur en influant sur deux paramètres à savoir, d'une part, la force d'aspiration de l'organe d'aspiration pulsante 10 sur la ou les conduites allongées 4 qui peut être modulée en apportant un volume d'air au champ de matière aspiré au niveau de la première ouverture 8' et, d'autre part, la dépression engendrée par le flux extrait de la chambre de résonance 1 qui peut être compensée par une recirculation ou un reflux d'air transmis à la chambre de résonance 1 par la ou les conduites allongées 4 conformées de sorte à maintenir la dépression de la chambre de résonance 1 proche de la pression standard extérieure.

Les conditions de cohérence et d'état du champ de matière étant ainsi créées, celui-ci après avoir circulé dans la chambre de résonance 1 est aspiré par la ou les sorties 3. Comme la section de la ou des conduites allongées 4 est petite par rapport à la section de la chambre de résonance 1, l'amplitude de contraction se renforce à ce niveau et se répercute sur la phase de contraction suivante au niveau du passage de la première ouverture 8' du raccordement de la chambre à solitons 8 à l'organe d'aspiration pulsante 10.

Le passage formé par la première ouverture 8' constitue un « noeud » de vitesse où les particules théoriquement immobiles ne dépassent pas la vitesse moyeme du flux. Par contre, les variations de pression y sont maximales, ce qui tend à faire croître le potentiel de charge transporté par le champ de matière à ce point. Pour que l'accélération dipolaire (conséquence du passage au « noeud » au niveau de la première ouverture 8') conduise à une disruption, il faut un porteur de charge opposée.

Le flux d'air qui est additionné au champ de matière doit donc répondre à certaines conditions d'orientation, de mouvement et d'évolution en sens opposé aux conditions du champ de matière et doit être en opposition de phase. On sait qu'au niveau des arrivées d'air 9 extérieur dans la chambre à solitons 8 se trouve un « ventre » de vitesse. Si ce point d'entrée de l'air se trouve au niveau du « noeud » intermédiaire de la ou des conduites allongées 4 résonnant en demi onde, les circulations parallèles orientées dans le même sens vers la première ouverture 8' sont en opposition de phase tout comme l'air dispensé par l'organe d'aspiration pulsante 10 ou grâce à l'accélérateur de débit 30.

L'air introduit se trouve donc dans un état de pression opposé à l'état de contraction du flux de matière au niveau de ladite première ouverture 8', remplissant ainsi la condition de couple accélérateur dipolaire.

Dans la dilatation qui suit le plan nodal (situé, par exemple, au niveau de la première ouverture 8') d'impulsion relativiste de vitesse, les effets disruptifs dépendent de la masse en mouvement. Si la densité des agrégats est suffisante l'ionisation ne requiert pas de facteur d'accélération supplémentaire : l'allumage est immédiat au niveau de l'organe d'aspiration pulsante 10.

Au contraire, si la densité de charge est insuffisante une augmentation de la vitesse est indispensable. L'expérience montre qu'une série limitée d'étincelles d'une bougie ou d'électrodes en un point quelconque proche de l'espace 11 de dilatation situé après la première ouverture 8' au niveau de l'organe d'aspiration pulsante 10 suffit à entraîner l'ionisation totale et ensuite permanente de tout le champ de matière qui transite par l'espace nodal existant au niveau de la première ouverture 8'.

Après l'allumage et la stabilisation de la flamme, le moyen d'assistance à l'allumage 12 est éteint. La réaction se poursuit ainsi aussi longtemps que l'approvisionnement par les moyens d'alimentation 2 de la chambre de résonance 1 n'est pas interrompu.

La cohérence de la flamme, reflet de celle du champ de matière, est celle d'un faisceau laser de basse fréquence de propagation, dont la couleur est fonction de la fréquence et de l'efficacité du battement de l'harmonique générée par la chambre acoustique 5. Toute l'énergie de mouvement de dilatation du champ de matières ionisées par l'accélération devient disponible.

Selon les caractéristiques de l'organe d'aspiration pulsante 10, la quantité de mouvement est amortie sous forme de chaleur cédée à un échangeur d'autant plus efficace qu'il reçoit plusieurs phases du mouvement de dilatation stationnaire qui se poursuit.

Dans un autre mode de réalisation, la quantité de mouvement confinée dans l'espace 11 devient force de pression applicable à un piston ou à des aubages d'une turbine. Il est également possible de stocker cette énergie sous forme de matière « noble » grâce à des dispositifs de la chambre à solitons 8, de la ou des conduites allongées 4 et de la chambre 1 qui conduisent à la condensation du champ de matières.

Si la ou les matières M mises en oeuvre présentent une inertie de traitement après l'arrêt de l'approvisionnement, il suffit de réduire l'aspiration de l'organe d'aspiration pulsante 10 et de régler convenablement la position des éléments 33, l'ouverture des arrivées d'air 9 et la position du chariot 31 pour que la réaction diminue progressivement jusqu'à l'arrêt complet.

On décrira dans ce qui suit, à titre d'exemples non limitatifs, différentes variantes préférées de réalisation du dispositif selon l'invention.

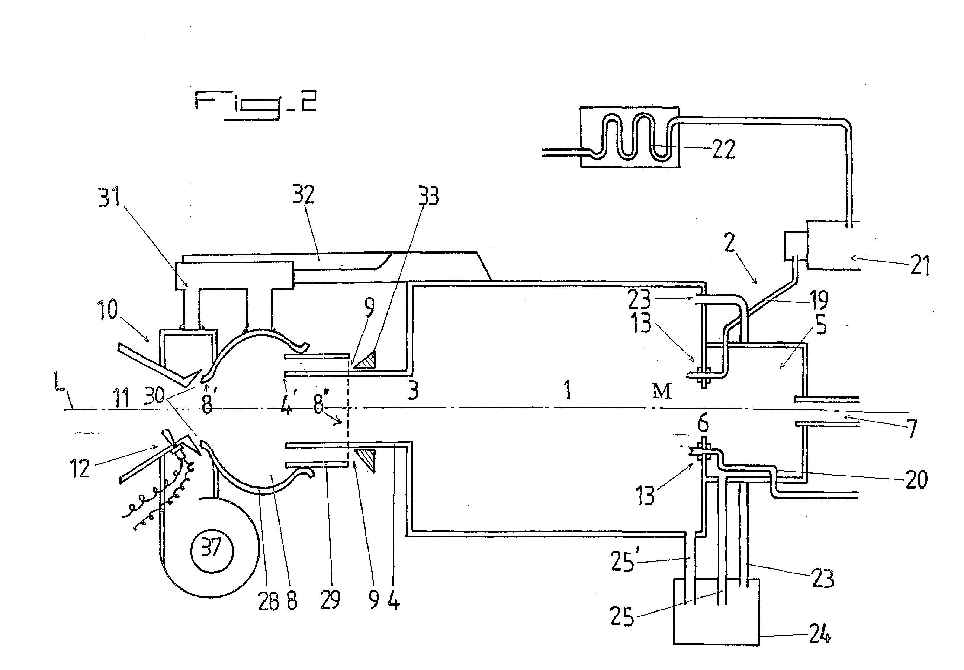

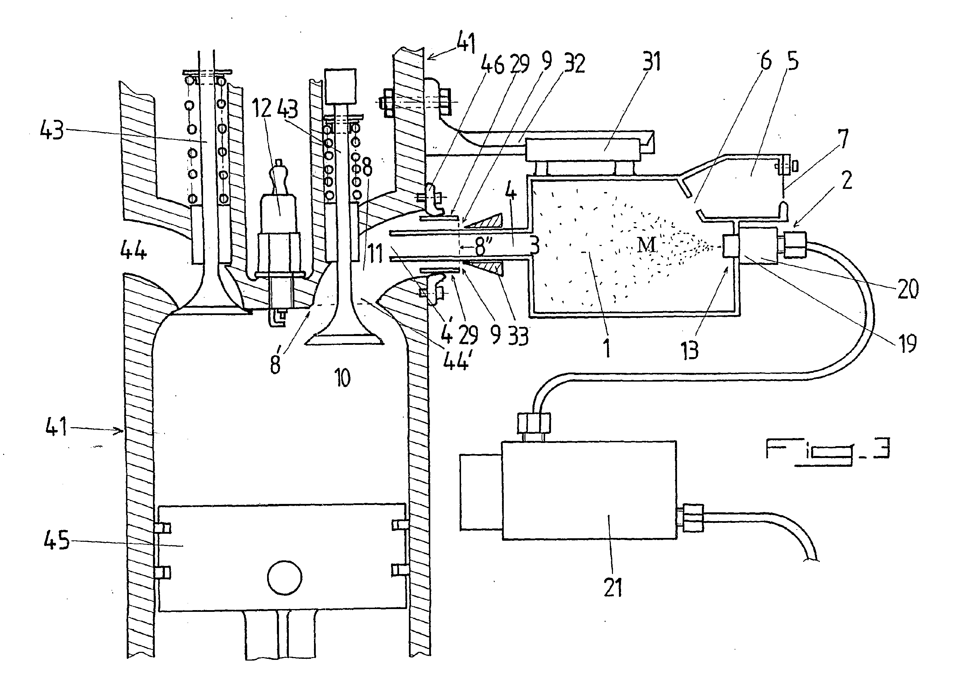

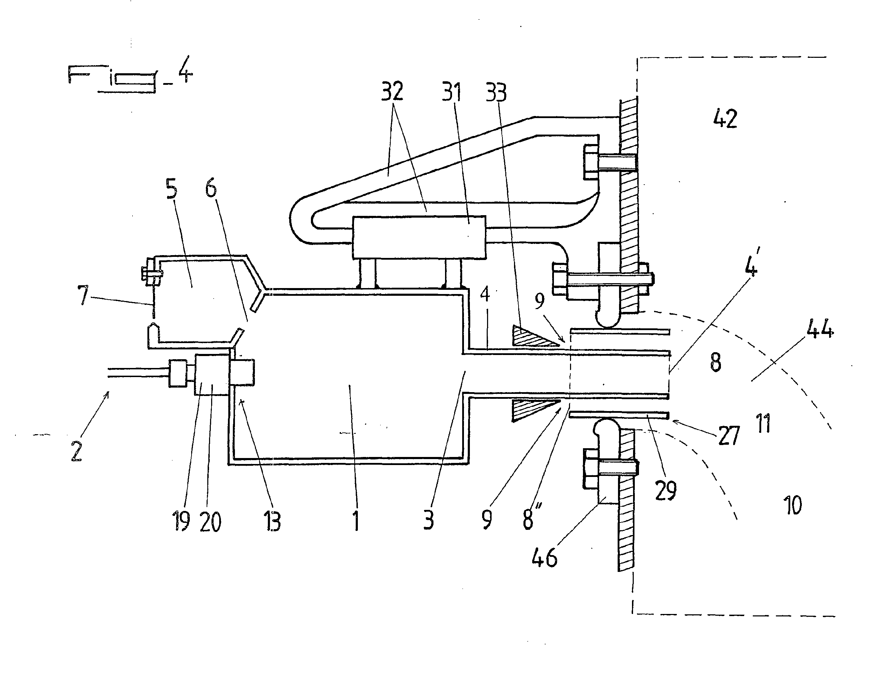

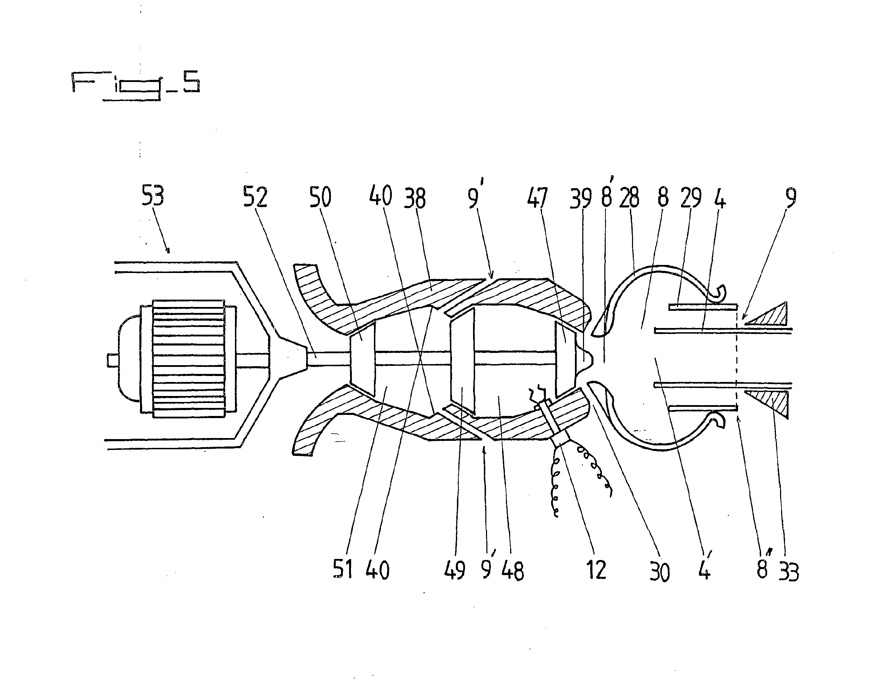

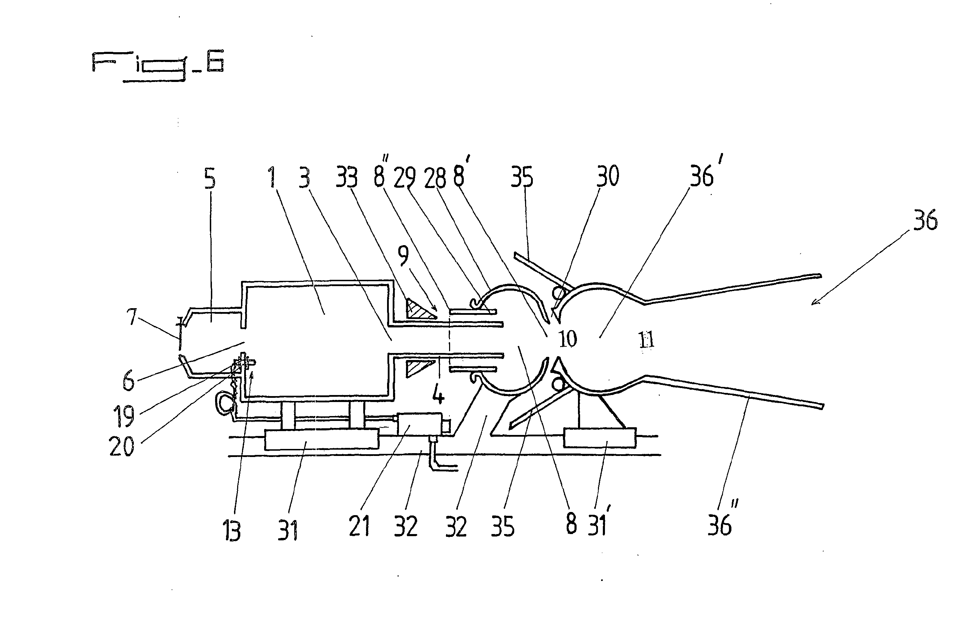

Les figures 2 à 6 représentent des dispositifs selon l'invention activés mécaniquement, par des brûleurs mixtes à liquides et à gaz (figure 2), un moteur à explosion à quatre temps (figure 3), un moteur à explosion à deux temps (figure 4), une turbine dans une version industrielle (figure 5) et un pulsoréacteur (figure 6).

La figure 2 des dessins annexés illustre un dispositif selon l'invention qui est conformé pour la mise en oeuvre des liquides et des gaz quelle que soit leur viscosité et quelle que soit la taille, domestique ou industrielle, dudit dispositif.

Comme on peut le voir sur cette figure, cette variante du dispositif général de la figure 1 est conformée pour utiliser sélectivement ou de manière simultanée des liquides et/ou des gaz par des moyens spécifiques adaptés aux états gazeux et liquides (fluide ou visqueux). La chambre de résonance 1 notamment munie du ou des moyens d'alimentation 2, de la conduite allongée 4 et de l'orifice 6, est pourvue, selon les applications, de moyens de collecte 24 et/ou d'évacuation 25, 25' et d'un évent 23.

Un manchon 29 destiné à faciliter le réglage de la chambre à solitons 8 est fixé sur la conduite allongée 4 de la chambre de résonance 1 de sorte à conserver l'entrée des arrivées d'air 9 au niveau du plan nodal de la conduite allongée 4, ce indépendamment de la position de la première ouverture 8' de ladite chambre à solitons 8 par rapport à l'extrémité 4' de la conduite allongée. Ledit manchon 29 crée entre lui-même et la face externe de la conduite allongée 4 un passage pour l'air entrant par les arrivées d'air 9.

La chambre acoustique 5 est munie d'un dispositif acoustique 7 (ajutage ou anche acoustique) et est reliée de manière étanche par l'orifice 6 à la chambre de résonance 1.

Selon une caractéristique de l'invention, le ou les moyens d'alimentation 2 consistent en un ou plusieurs dispositifs injecteurs et/ou nébulisateurs 19, 20, de la ou des matières M, lesquelles peuvent éventuellement être préalablement traitées en vue d'obtenir une présentation appropriée auxdits dispositifs injecteurs et/ou nébulisateurs 19, 20.

Le ou les dispositifs injecteurs et/ou nébulisateurs 19, 20 peuvent avantageusement comprendre des moyens de chauffage 22 de la ou des matières M destinées à alimenter la chambre de résonance 1.

Comme on le voit sur notamment la figure 2, les moyens d'alimentation 2 en matières M de la chambre de résonance 1 peuvent être constitués soit par une ou plusieurs buse(s) d'injection de gaz, soit par un ou plusieurs injecteur(s) de liquide(s) alimenté(s) par une pompe à injection 21 à débit variable accessoirement réchauffé ou encore par un couplage mixte de ces deux sources d'approvisionnement.

Selon une autre caractéristique, la chambre de résonance 1 et/ou la chambre acoustique 5 et/ou la chambre à solitons 8 et/ou la ou les conduites allongées 4 sont, en outre, pourvues d'un ou de plusieurs moyens de collecte 24 et/ou d'évacuation 25, 25' des trop-pleins, des résidus et/ou des condensats de combustion produits, lesdits moyens de collecte 24 et/ou d'évacuation 25, 25' pouvant être dotés d'évents 23, de moyens de protection thermique et/ou de refroidissement et/ou de chauffage et/ou de confinement.

Selon le mode de réalisation préféré représenté, le ou les moyens de collecte 24 sont disposés sous, et à proximité, de l'orifice 6 de la chambre acoustique 5.

Les moyens d'évacuation 25, 25' du trop-plein ou d'une saturation de la chambre de résonance 1 peuvent être constitués de tuyaux et être reliés à un moyen de collecte 24 ou réservoir commun étanche à l'air extérieur et muni d'un d'évent 23 qui débouche, par exemple, dans la chambre de résonance 1 ou la chambre acoustique 5.

La chambre à solitons 8, située dans l'axe longitudinal L du dispositif selon l'invention et en prise sur l'extrémité 4' de la conduite allongée 4, est fixée sur un support mobile réalisé sous la forme d'un chariot 31 coulissant sur le support fixe lui-même réalisé sous la forme d'un ou de plusieurs rails 32 qui sont solidaires de la chambre de résonance 1.

Le manchon 29 peut être déplacé par coulissement à frottement dans une direction parallèle à l'axe longitudinal L, déplaçant ainsi les arrivées d'air 9 par rapport aux éléments 33 fixés sur la conduite allongée 4. Ceci permet le réglage de la distance entre la première ouverture 8' de cette chambre à solitons 8 et l'extrémité 4' de la conduite allongée 4, l'espace entre le manchon 29 et la conduite allongée 4 faisant office de voie de communication avec l'extérieur, dont la section peut être contrôlée par l'intermédiaire du ou des éléments 33 réalisés, par exemple, sous la forme d'un manchon conique réglable par coulissement ou par rotation hélicoïdale sur ladite conduite allongée 4.

Un accélérateur de débit 30 également appelé ci-après « Venturi » à débit variable de l'organe d'aspiration pulsante 10, accolé à la première ouverture 8' de la chambre à solitons 8 de manière étanche, peut également être fixé sur le support commun ou chariot 31.

Comme représenté sur la figure 2, ce «Venturi» peut être alimenté par un ventilateur ou une turbine soufflante 37 et son divergent peut être équipé d'un moyen d'assistance à l'allumage 12, par exemple, à bougie ou électrodes.

Le ou les rails 32 servant de moyens de support reliés à la chambre de résonance 1 peuvent avantageusement comporter un dispositif de réglage (non représenté) de la course première ouverture 8'/extrémité 4' entre la chambre à solitons 8 et la conduite allongée 4.

Le dispositif représenté à la figure 2 fonctionne de la manière suivante : l'accélérateur de débit 30 ou « Venturi » est mis en marche en actionnant la source d'air provenant de la turbine soufflante 37. La ou les matières M combustible (s) éventuellement réchauffée(s) par le moyen de chauffage 22 sont injectée(s) dans la chambre de résonance 1 par les dispositifs injecteurs et/ou de nébulisation 19, 20.

De manière avantageuse, les gaz sont injectés par des buses traditionnelles à faible pression alors que les pressions d'injection des liquides (proportionnelles à leur densité) restent en deçà des valeurs habituellement utilisées en raison de la contraction utile à leur conditionnement.

Si l'alimentation de la chambre de résonance 1 est mixte, par exemple constituée d'un mélange de gaz et de fioul, il est plus facile de démarrer la réaction en premier par le gaz, sans que ceci soit une obligation.

De même, l'utilisation de fioul lourd ou d'huiles usagées est grandement facilitée si le gaz ou encore l'essence sont utilisés en premier ou de manière conjointe avec les matières de viscosité moyenne ou élevée. Par la suite, le combustible d'aide au démarrage peut être arrêté.

Les gaz et liquides pulvérisés ou atomisés par la pression d'injection sont conditionnés par les conditions de circulation vibratoires de la chambre de résonance 1 et parviennent sous forme de brouillard dans la conduite allongée 4, aspirés par l'effet contrôlé de la chambre à solitons 8.

Lorsque le champ de matières se présente au niveau du « Venturi », il est allumé par la bougie ou l'électrode du moyen d'assistance à l'allumage 12.

Un dispositif selon l'invention destiné à un usage domestique peut être préréglé et calibré une fois pour toutes et on peut se limiter aux seuls réglages de débit et d'adaptation au milieu. Selon une variante particulièrement adaptée à un usage domestique, la chambre à solitons 8 est solidaire de manière étanche de la conduite allongée 4 et l'arrivée d'air 9 extérieure est réalisée sous la forme d'un tuyau pénétrant à l'intérieur de la conduite allongée 4 en prenant son origine au plan nodal de la conduite 4 ou encore à l'un des plans nodaux du dispositif, pour distribuer l'air au niveau de l'extrémité 4' de cette conduite allongée 4.

Pour des dispositifs selon l'invention de taille industrielle ou pour le traitement des huiles lourdes, la montée en puissance est plus progressive et il est indispensable de suivre la montée en charge pour éviter des rejets de fumées à l'allumage.

On procède d'abord toujours de manière à opérer l'allumage au « Venturi » grâce au moyen d'assistance à l'allumage 12 dans les conditions de réglage de vitesse minimale, c'est-à-dire avec le dispositif acoustique 7 ouvert, la distance première ouverture 8'/sortie 3 réduite, les arrivées d'air 9 ouvertes avec une marge de garde et l'accélérateur de débit 30 fonctionnant à vitesse réduite. Une fois la réaction initiée, la progression de la réaction dans les systèmes à liquide est rapide, de sorte que l'on peut immédiatement effectuer les réglages appropriés des débits d'injection, du dispositif acoustique 7 vers son point minimum, d'augmentation de la distance première ouverture 8'/sortie 3 (ou extrémité 4'), de réduction ou d'augmentation des sections des arrivées d'air 9 et de montée en puissance du « Venturi » jusqu'à établir le bon débit qui correspond à la vitesse de conditionnement des matières M dans la chambre de résonance 1.

En effet, si la vitesse d'écoulement au « Venturi » est trop lente par rapport à la vitesse de conditionnement dans la chambre de résonance 1, le champ de particules sera saturé et plus lourd, l'impulsion de vitesse au niveau de la première ouverture 8' insuffisante laissant alors apparaître des $C_xH_y$ imbrûlés. Si au contraire la force de dépression appliquée par le « Venturi » est trop élevée, ou si l'arrivée d'air 9 est trop restreinte, le renforcement des amplitudes de contraction dues à la libération de l'hydrogène est mal compensé et la piézoélectricité se remarque par l'apparition de $SO_2$ et d'oxydes d'azote $NO_x$. Le défaut peut être le seul fait d'un déficit en oxygène mesuré dans les rejets. Dans ce cas, il est imputable à l'ouverture des arrivées d'air 9 et à la force appliquée par le « Venturi », laquelle doit rester assez forte pour favoriser la réflexion d'onde en forme de recirculation, dans la ou les conduites allongées 4, de l'air arrivant dans la chambre à solitons 8.

Dès que la flamme est stabilisée on arrête l'allumage par le moyen d'assistance à l'allumage 12. Les réglages peuvent être automatisés, par exemple grâce à la surveillance, au moyen de capteurs, des paramètres relevés aux points stratégiques du dispositif et grâce au traitement à l'aide de programmes informatiques.

Les gaz et les liquides relativement fluides (viscosité comparable à celle du fioul domestique ou de certaines huiles raffinées de faible densité) sont faciles à mettre en oeuvre parce qu'ils sont déjà sous forme moléculaire simple comme les gaz ou sous forme de fines gouttelettes pour les liquides pulvérisés par les injecteurs. Ils sont sensibles aux vibrations et condensent facilement, un plus grand degré de liberté permettant un conditionnement rapide dans des chambres de résonance 1 de petites dimensions, dans lesquelles les vitesses du flux stationnaire sont élevées, entraînant l'apparition de pulsations à plus haute fréquence.

Il n'est pas nécessaire de provoquer une dissociation plus fine dans la chambre de résonance 1 par une amorce de réaction de combustion classique. Les ruptures des molécules de dihydrogène se produisent au moment de la contraction ultime avant le passage du plan nodal de la première ouverture 8' contrôlé comme précédemment décrit. L'ionisation initiale ou allumage du champ de matières demande seulement une accélération locale par des étincelles du moyen d'assistance à l'allumage 12 qui est ensuite arrêté.

Une fois la matière ionisée, les vitesses cinétiques élevées de dilatation créent le vide accélérateur au niveau du plan nodal de la première ouverture 8'. Les premières injections du fioul domestique peuvent avantageusement être réchauffées pour l'allumage initial.

Par la suite, le renforcement de l'amplitude due au vide créé par l'ionisation au plan nodal de la première ouverture 8' suffit à entretenir la réaction. A partir d'une certaine densité des matières mises en oeuvre, les moyens de régulation des forces appliquées par l'organe d'aspiration pulsante 10 combinés avec les dispositifs permettant le réglage de la distance entre la première ouverture 8' et l'extrémité 4' sont de nature à provoquer une accélération ionisante sans qu'un allumage initial électronique ne soit nécessaire.

Les fluides visqueux moins véloces risquent de ne pas répondre à la sollicitation du battement à la fréquence imposée par une chambre de résonance 1 de petite dimension sauf à être conditionnés de manière très précise et forcément plus onéreuse. Il existe donc une dimension critique du parcours du flux stationnaire en fonction des forces de liaison présentes dans la ou les matières M mises en oeuvre. Le conditionnement idéal est réalisé par la circulation d'un groupe de particules soumis à de multiples réflexions d'onde. Les huiles lourdes ou usagées supposent donc une dimension de la chambre de résonance 1 qui soit adaptée à leur degré de liberté et d'être réchauffées en permanence à une température minimale de l'ordre de 70°C, de sorte à présenter la viscosité requise pour une pulvérisation suffisamment fine sans pour autant atteindre le stade de l'aérosol qui condenserait des petites particules et demanderait alors une augmentation du nombre de contractions et de condensations pour obtenir des agrégats porteurs d'un potentiel de charge significatif.

La flamme résultant de la mise, en oeuvre du dispositif selon l'invention est équivalente à un faisceau' laser qui pulserait à basse fréquence. Elle en possède la cohérence et la propriété de continuité liée au système d'onde soliton macroscopique y compris dans les dispositifs industriels de grande taille.

On sait que la longueur d'onde du champ ionisé est fonction de la valeur de l'impulsion de vitesse au plan nodal de la première ouverture 8' rapportée à la masse porteuse de charge des agrégats. Partant d'une flamme établie, il est possible d'augmenter la puissance de l'effet Venturi en se référant aux teneurs en $SO_2$, en $O_2$ et en $CO_2$ des gaz émis en opérant les corrections nécessaires (en agissant sur les arrivées d'air 9 et le chariot 31 de la chambre à solitons 8) et en contrôlant la recirculation. Par contre, on doit éviter de forcer le passage acoustique existant au niveau du dispositif acoustique 7 qui apporte de l'oxygène et qui tend à favoriser localement l'agitation thermique.

Suivant la dimension de la chambre de résonance 1, le débit et la finesse de pulvérisation, des effets de paroi ne sont pas exclus et peuvent engendrer une précipitation de liquide qui se retrouve alors dans le bas de la chambre de résonance 1 ainsi qu'une condensation dans la chambre acoustique 5 en raison du filet d'air extérieur du dispositif acoustique 7. Pour éviter une accumulation dans ces chambres, des moyens d'évacuation 25, 25' qui ne modifient pas l'atmosphère de ces chambres sont reliés à au moins un moyen de collecte 24 étanche à l'air extérieur et préférentiellement muni d'un évent 23 qui retourne dans la chambre de résonance 1 ou la chambre acoustique 5.

Les avantages de ce mode de réalisation résident dans la souplesse de l'utilisation mixte ou successive de combustibles différents tel que le gaz et le fioul dans des dispositifs domestiques de chauffage ainsi que dans la facilité de mise en oeuvre d'huiles lourdes ou usagées qui sont difficilement éliminables sans risques. La quantité de chaleur transmise par le champ ionisé est supérieure à celle d'une flamme classique en raison de l'évolution stationnaire génératrice d'une succession de ventres de dilatations augmentant les surfaces d'échange de la chaleur.

Par ailleurs, la cohérence de la flamme à grande dimension autorise la mise en oeuvre de fours de grande capacité limitant la déperdition par l'emploi d'une seule source de chaleur de grande longueur.

La qualité des émissions qui ne polluent pas l'environnement grâce à l'absence d'oxydation fait que ces dispositifs sont tout à fait adaptés à une utilisation urbaine et industrielle.

La figure 3 des dessins annexés illustre un second mode de réalisation du dispositif selon l'invention.

Le dispositif est actionné par un moteur à explosion 41 à quatre temps alimenté par soupapes, la réaction produite en retour par le dispositif selon l'invention entretenant le mouvement forcé du moteur à explosion 41 mono ou multicylindres. La chambre à solitons 8 du dispositif selon l'invention est constituée par la chambre de combustion du moteur dans la phase admission.

L'organe d'aspiration pulsante 10 ou cyclique est donc constitué par un moteur à explosion 41 comprenant de manière classique une ou plusieurs soupapes d'admission 43 et d'échappement soit à allumage commandé, soit sans allumage mais avec un plus grand rapport volumétrique.

La pompe à injection 21 pour les dispositifs injecteurs et/ou de nébulisation 19, 20 du moyen d'alimentation 2 du dispositif selon l'invention peut avantageusement être la pompe à injection multipoints du moteur à explosion 41 multi-cylindres.

La ou les pipes d'admission 44, 44' sont équipées (éventuellement chacune d'entre elles) extérieurement du tronçon d'entrée (réalisé comme arrivée(s) d'air 9) d'une (demi) chambre à solitons 8, dans laquelle vient se loger le manchon 29 de la conduite allongée 4 d'une chambre de résonance 1 maintenue en place par un dispositif de positionnement constitué d'un chariot 31 mobile se déplaçant sur un ou plusieurs rails 32 solidaires du moteur à explosion 41. Une collerette 46 est placée au niveau de l'entrée (extérieure) de la pipe d'admission 44' pour recevoir le manchon 29 et faciliter son réglage.

La ou les arrivées d'air 9 de la chambre à solitons 8 sont situées au droit du plan nodal de la conduite allongée 4, dont la longueur totale correspond, à titre d'exemple non limitatif, à la longueur de la course du piston 45 pour +/- 110° de rotation du PMH (point mort haut) vers le PMB (point mort bas). La ou les arrivées d'air 9 de la chambre à solitons 8 peuvent également être situées au droit de l'un des autres plans nodaux possibles du dispositif.

La chambre de résonance 1 est également pourvue d'une chambre acoustique 5 munie d'un orifice 6 et d'un dispositif acoustique 7 réalisé, par exemple, sous la forme d'un ajutage acoustique ou d'une anche acoustique.

Selon une caractéristique avantageuse de l'invention, le ou les moyens d'alimentation 2 de la chambre de résonance 1 sont disposés en regard d'une sortie 3 de ladite chambre de résonance 1 et sur l'axe longitudinal d'une conduite allongée 4.

Dans ce mode de réalisation préféré, le ou les moyens d'alimentation 2 de la chambre de résonance 1 sont toujours placés sur le côté opposé à celui qui reçoit la conduite allongée 4 mais de façon à ce que les dispositifs injecteurs et/ou de nébulisation 19, 20 se trouvent, de manière idéale mais non limitative, dans l'axe longitudinal de la chambre de résonance 1 en raison de son petit volume. Comme on le voit sur la figure 3, la chambre acoustique 5, son dispositif acoustique 7 et son orifice 6 se trouvent donc dans une position latéralement décalée par rapport à la chambre de résonance 1, contrairement à l'agencement représenté par exemple sur la figure 2, où tous les éléments précités sont centrés sur l'axe horizontal L.

La mise en route du moteur à explosion 41 se fait par un moyen classique de lanceur ou de démarreur. L'injection des matières M est calée de sorte qu'elle introduise le combustible choisi dans la chambre de résonance 1 exactement à l'instant de l'ouverture de la soupape d'admission 43. La fermeture de la soupape d'admission 43 ne doit pas intervenir avant 290° du tour de vilebrequin depuis le PMH de début d'admission.

Dans le mode de réalisation précédemment décrit, le volume de la chambre de combustion du moteur à explosion 41 constitue une chambre à solitons 8, dont la pipe d'admission 44' correspond au côté ovoïde étroit (première ouverture 8') de la chambre à solitons 8 plus générale décrite dans les modes de réalisation précédents. Le piston 45 contre lequel se forme un « ventre » de mouvement génère au moins un plan nodal à chaque mouvement vertical. L'onde incidente de dépression produite par le mouvement du piston 45 à l'admission transite par la chambre à solitons 8, laquelle coopère avec la pipe d'admission 44' avant de poursuivre son chemin jusqu'au fond de la chambre de résonance 1 où elle est réfléchie en direction de la chambre à solitons 8 après avoir subi une suite de réflexions dans la chambre de résonance 1.

A son premier passage dans la chambre à solitons 8, la dépression donne lieu à une première compensation par le passage de l'air extérieur à travers les arrivées d'air 9 constitutif de solitons mais avec un décalage dû à la position avancée de l'extrémité 4' de la conduite allongée 4 par rapport à celle des arrivées d'air 9. La course du piston 45 génère de cette manière plusieurs impulsions de dépression qui se réfléchissent sur le fond de la chambre de résonance 1, activent le dispositif acoustique 7 et impliquent chaque fois une onde d'air extérieur composante de la propagation soliton, dont l'amplitude croît à chaque impulsion reçue du piston 45. Comme la chambre de résonance 1 et la chambre de combustion à volume variable du moteur à explosion 41 sont en état de dépression, ce sont les amplitudes de contractions qui se renforcent.

Lorsque le piston 45 est au PMB le « ventre » de mouvement continue son évolution en dilatation et passe en contraction avant 290°. Cette contraction du soliton à son extrême amplitude tend à condenser le champ de matières. La contraction des molécules de dihydrogène plus labiles conduit à des ruptures de liaisons qui renforcent l'amplitude de cette contraction. Pour éviter une éventuelle cristallisation de carbone et contrôler l'amplitude de contraction pendant la remontée du piston 45 vers le PMH, la soupape d'admission 43, qui maintient le contact par les arrivées d'air 9 avec l'air extérieur, doit rester ouverte au moins jusqu'à la côte angulaire de 290°. La position du chariot 31 est réglée de manière à ce que la compensation par l'onde d'air extérieur dans la chambre à solitons 8 se fasse.

Le PMH après fermeture de la soupape d'admission 43 constitue le plan nodal virtuel équivalent à celui de la première ouverture 8' de la chambre à solitons 8 des réalisations précédentes. C'est à cet instant que doit intervenir le « complément » de vide par l'allumage grâce au moyen d'assistance à l'allumage 12, ici une bougie. Plus rapide que dans les systèmes classiques, cette opération demande moins d'avance et doit être programmée vers +/- 10° d'avance sur le PMH. Pour un moteur sans allumage c'est la position de l'extrémité 4' de la conduite allongée 4 en combinaison avec le réglage des arrivées d'air 9 et de la position du chariot 31, facteurs de la longueur d'onde macroscopique du champ soliton, qui permettent de positionner le plan nodal précédant l'accélération juste au niveau du PMH. La contraction du champ après le passage au PMB consomme la chaleur de la chambre de combustion, ce qui a comme conséquence que le moteur chauffe moins que son homologue classique. Le mouvement stationnaire se poursuivant après ionisation, la vidange de la chambre à solitons 8 se trouve facilitée par la contraction du champ à l'échappement.

L' ionisation ne donnant pas lieu à des réactions d'oxydation, le moteur fonctionnant avec le dispositif selon l'invention est « propre » et particulièrement intéressant pour l'environnement.

La figure 4 des dessins annexés illustre un troisième mode de réalisation du dispositif selon l'invention. Le dispositif est actionné par un moteur à explosion 42 (suggéré en pointillés) à deux temps, dans lequel la chambre à solitons 8 est répartie entre les deux volumes pulsants : l'admission raccordée à la sortie 3 de la chambre de résonance 1 et la chambre de combustion, comme décrit ci-après.

Comme on le voit très clairement sur la figure 4 précitée, ce mode de réalisation du dispositif selon l'invention comporte un certain nombre de moyens communs à ceux décrits dans les réalisations précédentes qui ne seront pas tous recités ou redécrits ici.

Selon le mode de réalisation illustré, le dispositif est introduit dans l'ouverture d'admission, soit du bas moteur, soit par la pipe d'admission 44 dans le cas d'une chambre annexe.

Une collerette 46 est également placée sur l'entrée de l'orifice d'admission pour recevoir le manchon 29 et faciliter son réglage. Le combustible est introduit par un ou plusieurs dispositifs injecteurs et/ou de nébulisation 19, 20 et selon sa nature dans la chambre de résonance 1, au moment précis du commencement de l'admission. Le combustible est conditionné puis introduit dans l'espace formé par l'association de l'espace de conditionnement avec la chambre de combustion.

Pour faciliter le transfert et mieux contrôler le conditionnement, la lumière de sortie dans la chambre de combustion reste ouverte plus longtemps. Dans ce cas, une soupape ou un clapet situés sur le canal de transfert ferment après 290° ou par effet de pression de manière à s'opposer au retour dans la partie de chambre de résonance 1 (chambre de conditionnement). Le dispositif selon l'invention peut être monté sur un moteur classique et ne demande pas d'autres modifications.

Divers moyens peuvent être utilisés pour l'alimentation des moteurs à deux temps, soit par le bas moteur, soit par une chambre annexe indépendante. Dans ce dernier cas tous les dispositifs de compression sont à éliminer et seuls ceux qui aspirent en phase opposée à celle du piston moteur sont utilisables comme organes d'aspiration pulsante 10. Si le bas moteur constitue une partie de la chambre à solitons 8, la condition est immédiatement réalisée, le piston réduisant le volume de la chambre de combustion et augmentant celui de la chambre à solitons 8 qui bat automatiquement en phase inverse de la chambre de combustion constitutive du complément de la chambre à solitons 8.

Si le conditionnement est réalisé dans une partie de chambre à solitons 8 annexe son volume doit battre exactement en sens inverse de celui de son complément, la chambre de combustion. En effet, la contribution des deux volumes variant en sens inverse reproduit de manière idéale les conditions stationnaires de la chambre à solitons 8 du dispositif de la figure 1 ou 2 dans laquelle il y a un « ventre » de vitesse à l'extrémité 4' de la conduite allongée 4 et une contraction au plan nodal de la première ouverture 8'.

Le moment d'injection est dicté par la position basse du piston au départ de l'admission par sa remontée vers le PMH. Le combustible introduit par plusieurs dispositifs injecteurs et/ou de nébulisation 19, 20 est conditionné dans la chambre de résonance 1 et ensuite aspiré au travers de la conduite allongée 4 par la montée du piston vers le PMH. Pendant l'aspiration qui résulte du mouvement du piston, le champ arrive en condition de « ventre » de vitesse par l'extrémité de la conduite allongée 4 dans la partie de la chambre à solitons 8.

Correspondant au même phénomène que le battement du piston du cycle à quatre temps, il existe un plan nodal avant +/- 110° de la descente du piston et avant +/- 290° de la remontée. Contre le piston doit se trouver un « ventre » lequel est effectif sans que ces positions PMB et PMH en soient l'axe. A la remontée du piston du PMB vers le PMH, il existe un plan nodal avant +/- 290° et le sens de dilatation du champ entrant devient sens de contraction. Le mouvement de contraction tendrait à rappeler le piston si le passage ouvert des arrivées d'air 9 n'opérait pas la compensation pendant la fin de la remontée au PMH. Lorsque le piston redescend du PMH au PMB, le champ est en contraction, facilitant ainsi ce mouvement. Dans la descente du piston avant +/- 110° le mouvement du champ s'inverse et repasse en dilatation. Alors que la course du piston libère la lumière de transfert, la dilatation pousse le champ par cette voie disponible vers la chambre de combustion d'autant que celle-ci, en phase d'échappement, se trouve en dépression due à la contraction de l'échappement. Le champ de matières est ainsi transféré au-dessus du piston. Le piston remonte vers le PMH avant +/- 290° et le mouvement du champ repasse en contraction, la lumière de transfert étant fermée par la montée du piston, la contraction n'est plus compensée par les arrivées d'air 9. Au contraire, l'amplitude est renforcée par les ruptures de l'hydrogène, l'appoint du vide des étincelles du moyen d'assistance à l'allumage 12 augmentant l'impulsion de vitesse et entraînant les effets disruptifs des charges polarisées.

Cette contraction est fonction des réglages, par la position du chariot 31, de l'extrémité 4' de la conduite allongée 4 et du réglage des arrivées d'air 9. La longueur d'onde doit également être ajustée par rapport au PMH pour que l'ionisation ne soit pas précoce, ce qui ferait cogner le moteur, ou tardive, ce qui ferait perdre de la puissance. La vitesse ou fréquence interne du champ peut être contrôlée par l'ajutage acoustique de la chambre acoustique 5 sans variation du débit de combustible ou par l'augmentation de la quantité de particules en augmentant le débit des dispositifs injecteurs et/ou de nébulisation 19, 20.

La dilatation qui suit l'accélération au PMH repousse le piston vers le PMB et, conformément au processus stationnaire, vers le PMB où la dilatation passe en contraction en créant un vide au moment de l'échappement dans le même temps où le champ de matière qui suit, conditionné dans la première partie se trouve en dilatation toutes lumières de transfert d'admission et d'échappement ouvertes. La contraction de l'échappement favorise l'introduction du champ préparé par sa lumière de transfert d'admission sans qu'il soit nécessaire de recourir à un clapet anti-retour dans la partie des arrivées d'air 9 de la fraction de chambre à solitons 8 à l'entrée de la conduite allongée 4.

Dans une autre variante, la lumière haute du transfert d'alimentation est ouverte vers le haut de sorte que sa fermeture par le piston soit retardée, ce afin d'augmenter le délai de transfert. Un clapet anti-retour ou une soupape commandés sont alors interposés dans le canal de transfert, afin que le champ de matière ne soit pas perturbé dans la zone de préparation par un retour de pression de la phase motrice (après ionisation), ce qui conduirait en outre à une perte de puissance.

La figure 5 des dessins annexés illustre un quatrième mode de réalisation du dispositif selon l'invention. Le dispositif est actionné par une turbine à gaz 38 accolée à la première ouverture 8' de la chambre à solitons 8 ou encore à l'accélérateur de débit 30 ou « Venturi », le premier aubage 39 produisant une aspiration pulsante. Le dispositif selon cette variante est de nature à utiliser au moins deux phases de dilatation alors que les systèmes à piston précédemment décrits n'en utilisent qu'une.

Comme représenté sur ladite figure 5, une turbine à gaz 38 possède en entrée, avant une première chambre de combustion 48, un premier aubage 39 d'une turbine aspirante 47 qui est reliée directement à l'accélérateur de débit 30 ou « Venturi » réglable, ouvert sur l'extérieur qui suit la première ouverture 8' de la chambre à solitons 8 d'un dispositif tel que notamment décrit dans les réalisations illustrées aux figures 1 ou 2.

La turbine à gaz 38 est équipée d'un lanceur ou démarreur pour créer l'aspiration de départ. A la suite de la turbine aspirante 47, se trouve une chambre de combustion 48 constituée d'un tronçon divergent suivi d'une partie de section droite qui se termine par une turbine réceptrice 49. La chambre de combustion 48 est équipée d'un moyen d'assistance à l'allumage 12. La sortie de la turbine réceptrice 49 débouche sur un tronçon de chambre divergent 40 relié à un tronçon plus long convergent terminé par une autre turbine 50, les deux tronçons associés constituant la chambre 51, munie d'arrivées d'air 9 de sections réglables communiquant avec l'extérieur et situées dans le tronçon divergent 40. La sortie de la turbine 50 débouche sur un tronçon divergent ouvert sur l'extérieur. Toutes les turbines sont solidaires d'un arbre 52 pouvant être relié à un moyen conventionnel producteur d'énergie 53.

La turbine aspirante 47 est actionnée par le démarreur. Dans le même temps on injecte continuellement du combustible dans la chambre de résonance 1 par des dispositifs adéquats (non représentés). L'aspiration provoquée par la turbine aspirante 47 conditionne le champ de combustible dans la chambre de résonance 1 résonant sous l'effet du dispositif acoustique 7 de la chambre acoustique 5 (non représentés). Le champ conditionné est aspiré par la conduite allongée 4 et se présente au passage nodal de la première ouverture 8' où il subit une accélération. Absorbé par la turbine aspirante 47, il débouche dans la chambre de combustion 48 où le moyen d'assistance à l'allumage 12 électronique complète l'accélération et initie la flamme.

**EP 1 321 014 B1**

La dilatation de l'ionisation qui s'en suit crée, dans le tronçon de chambre rectiligne de la chambre de combustion 48, une pression équivalente à une force qui s'applique aux sorties orientées à travers les aubages de la turbine réceptrice 49 solidaire de l'arbre 52 qui reçoit cette force de rotation. A la sortie de ladite turbine réceptrice 49, un tronçon de chambre divergent facilite l'échappement des passages au travers de cette turbine en créant une zone de contraction contrôlée par les arrivées d'air 9 de sections réglables en contact avec l'extérieur pour éviter la condensation et l'avortement du système stationnaire constitutif d'une nouvelle dilatation qui suit la contraction.

La dilatation génératrice d'une nouvelle pression est contenue par un tronçon convergent qui guide le champ sur une nouvelle turbine 50. Les passages de cette turbine, orientés dans le même sens que ceux de la turbine réceptrice 49, reçoivent également une pression dans un sens de rotation transmis à l'arbre 52, dont cette turbine 50 est solidaire. La sortie de la turbine 50 débouche sur un tronçon de conduit divergent et ouvert sur l'extérieur qui favorise le passage au travers des aubages.

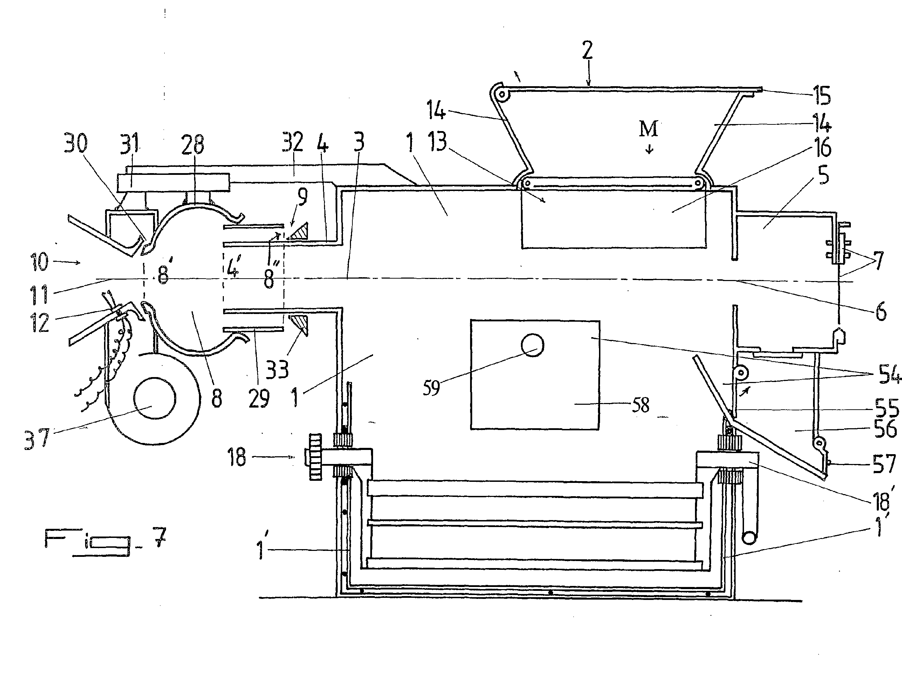

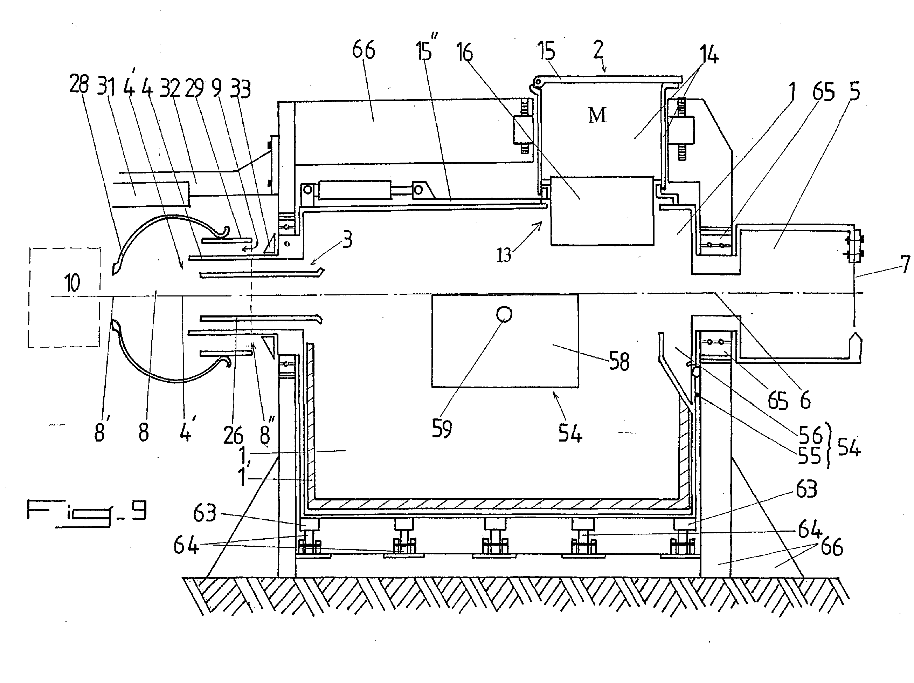

En raison de la cohérence des flammes du type laser, les dispositifs industriels tels que ceux qui sont représentés aux figures 7 et 9 sont en mesure d'alimenter des turbines multi-étages de grandes dimensions.

La figure 6 des dessins annexés illustre un cinquième mode de réalisation du dispositif selon l'invention. Le présent dispositif utilise les dispositifs des figures 1 ou 2 pour dilater l'air admis sous pression positive dans une chambre de combustion et multiplier cette pression par la chaleur et la quantité de mouvement transmise à cet air par le champ ionisé à partir d'un divergent d'échappement qui en fait un dispositif de propulsion par réaction dans l'air ambiant.

Comme représenté sur ladite figure 6, le présent dispositif de propulsion est constitué d'un des dispositifs des figures 1 ou 2, dont la chambre à solitons 8 est associée à un ou des déflecteurs 35 convergents réglables. Ce ou ces déflecteurs 35 sont solidaires d'une chambre de dilatation 36' de forme sphérique ou encore cylindrique, dont l'accouplement à la chambre à solitons 8 forme un accélérateur de débit 30 ou « Venturi » alimenté par le ou les déflecteurs 35 suivi d'un tronçon de section divergente, la suite de la chambre de dilatation 36' se terminant par un tronçon convergent relié à une sortie en forme de divergent 36". La chambre de dilatation 36' et le ou les déflecteurs 35 associés sont solidaires d'un chariot 31, dont la position peut être réglée par rapport au support général réalisé sous la forme d'un ou plusieurs rails 32. Le divergent 36" de sortie de l'air en pression étant propulseur, le sens de fonctionnement est déterminé par une direction de mouvement caractérisée en ce que la chambre acoustique 5 est située à l'avant du dispositif et dans lequel le divergent 36" constitue la partie arrière. Dans une autre variante non représentée, une turbine soufflante 37 alimente le déflecteur 35 convergent pendant la phase de mise en action.

Le dispositif décrit ci-dessus est mis en marche selon le sens de fonctionnement de la chambre acoustique 5 et de son dispositif acoustique 7 situés à l'avant. Le ou les déflecteurs 35 captent une quantité d'air qui est mise en pression par la réduction du sens convergent de ces déflecteurs 35. La pression de l'air au fond du ou des convergents s'applique et actionne le « Venturi ». L'aspiration pulsante qui en résulte agit sur la chambre à solitons 8, se transmet à la chambre de résonance 1 par la conduite allongée 4 et à la suite par la chambre acoustique 5 jusqu'au dispositif acoustique 7 qui réagit en imprimant une vibration au système pulsant. L'injection de combustible est activée dans la chambre de résonance 1, dont le régime pulsatoire macroscopique doublé de l'effet vibratoire transmis par la chambre acoustique 5 conditionne le combustible injecté sous forme de champ ou de brouillard.

Le champ de particules ou brouillard est aspiré par la conduite allongée 4 et se présente au plan nodal de la première ouverture 8' pour subir l'accélération complétée par l'allumage du moyen d'assistance à l'allumage 12 qui ionise le champ. Les paramètres de distance extrémité 4'/première ouverture 8' et première ouverture 8'/chambre de dilatation 36' et les arrivées d'air 9 sont ajustés en fonction de l'objectif. L'ouverture du « Venturi » est augmentée grâce au réglage de la position du chariot 31' solidaire de la chambre de dilatation 36'.

Une plus grande quantité d'air extérieur sous pression entre dans ladite chambre et est intimement mélangée au champ dont elle contribue à l'ionisation. Le dégagement intense de chaleur et la phase de dilatation multipliée par les effets ioniques polarisés additionnés à la quantité d'air incorporée de la sorte forment une pression contribuant à l'accroissement des vitesses cinétiques de la forme convergente de la partie arrière de la chambre de dilatation 36'. Le divergent 36" contribue alors à l'éjection supersonique de la masse du champ en mouvement qui vient buter sur l'atmosphère extérieure.

Pour éviter les ondes de chocs au niveau du raccordement entre la sortie de la chambre de dilatation 36' et le divergent 36" constitutif d'un plan nodal, ledit divergent 36" possède avantageusement une forme allongée et progressive qui tend à déplacer vers l'arrière l'espace de vide du plan nodal et répartissant la poussée qui en résulte sur un tronçon et non pas en un point, ce qui aurait des effets destructifs.

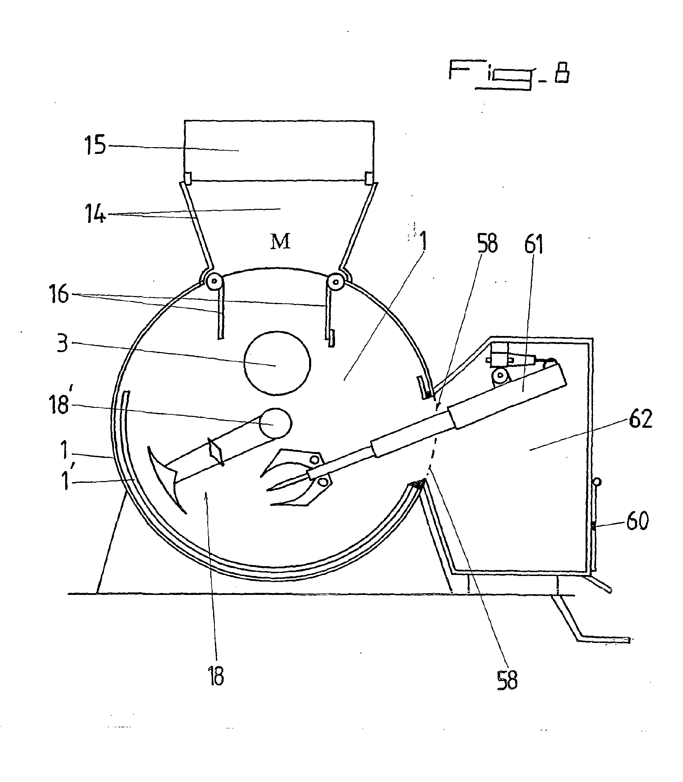

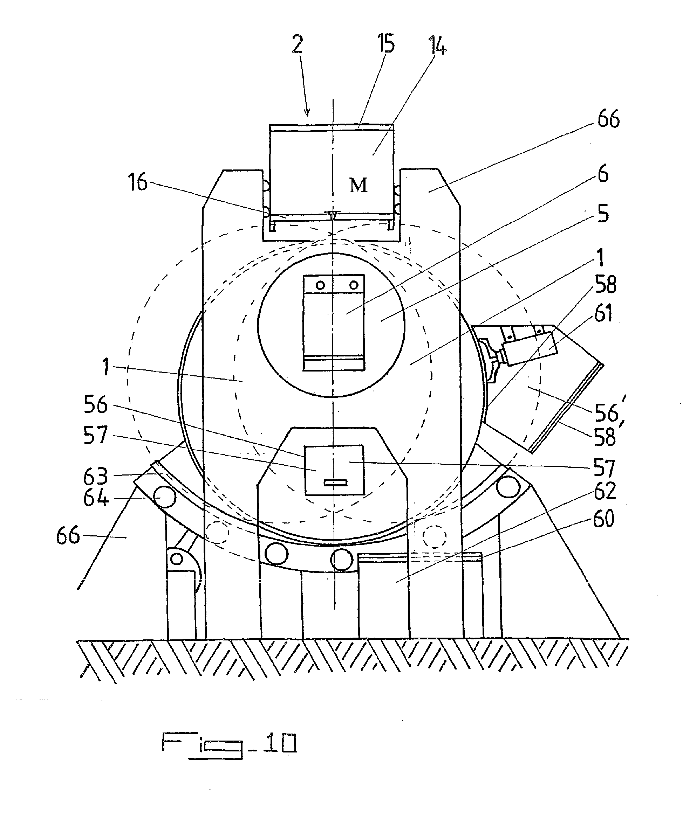

On décrira à présent, également à titre d'exemples non limitatifs, d'autres variantes avantageuses du dispositif selon l'invention. Les figures 7 à 11 représentent des dispositifs selon l'invention dans lesquels la chambre de résonance 1 a été adaptée à la nature des matières M utilisées. Ainsi, des variantes convenant particulièrement au traitement des pneus et déchets prévoient l'utilisation d'une cuve fixe (figures 7 et 8) ou mobile (figures 9 et 10), des moyens d'extraction de résidus, des bacs à précipités...

La variante représentée aux figures 7 et 8 prévoit une chambre de résonance 1 munie d'une trémie 14 particulièrement destinée à des matières M solides et/ou fondantes (bois, matières plastiques ... )

Comme représenté sur les figures 7 et 8, le dispositif destiné au traitement des déchets solides hétéroclites est constitué d'une chambre de résonance 1 fixe présentant un volume adapté à la nature de ces déchets. Cette chambre de résonance 1 est caractérisée par un alignement excentré de l'axe reliant la chambre à solitons 8 au dispositif acoustique 7, un renflement au bas de la chambre de résonance 1 laquelle est équipée d'une double enceinte partielle de protection ou d'un dispositif d'échange thermique dans la zone de dépôt des matières solides et par au moins un dispositif 18 de brassage.

Le dispositif selon l'invention, de dimensions limitées par les conditions de brassage de la matière, est caractérisé par sa simplicité de mise en oeuvre. D'après la figure 7, il comprend une chambre de résonance 1 munie, d'un côté, d'une conduite allongée 4 et de l'autre côté, d'un orifice 6 débouchant dans une chambre acoustique 5 munie d'un dispositif acoustique 7.

La chambre de résonance 1 est aménagée pour recevoir la matière dans sa partie basse sur un revêtement 1' isolant, réfractaire ou simplement une double paroi de l'enveloppe extérieure. Un manchon 29 destiné à faciliter le réglage de la chambre à solitons 8 est fixé sur la conduite allongée 4 de la chambre de résonance 1 pour former une ou plusieurs arrivées d'air entre ledit manchon 29 et la face externe de ladite conduite allongée 4.

Comme détaillé plus loin, un manchon supplémentaire (non représenté) peut être placé à l'intérieur de la conduite allongée 4 si celle-ci est de grande dimension.

Selon une caractéristique de l'invention, la ou les ouvertures d'alimentation 13 sont surmontées d'au moins une trémie 14 pouvant être munie d'une porte supérieure 15 de fermeture et d'une porte inférieure 16 de fermeture et/ou d'une grille 17 inférieure.

De manière avantageuse, la ou les trémies 14 peuvent comprendre des moyens de chauffage 22 (non représentés) de la ou des matières M destinées à alimenter la chambre de résonance 1.

Le dispositif peut également comprendre une ou plusieurs sorties 54 réalisées, par exemple, sous la forme d'une trappe 55 et un cendrier 56 étanche fermé par une décharge 57 et/ou sous la forme d'une porte coulissante 58 qui ouvre sur un conteneur de refroidissement 62 solidaire et communiquant avec la chambre de résonance 1 par un évent 59 dans ladite porte coulissante 58, ledit conteneur de refroidissement 62 pouvant être muni d'une porte de déchargement 60 étanche vis-à-vis de l'extérieur et pourvu d'un moyen de préhension 61 télescopique pour l'évacuation desdits déchets.

Le dispositif comprend comme expliqué dans les modes de réalisation précédents, une chambre à solitons 8 située dans l'axe et devant la conduite allongée 4, fixée à un chariot 31 mobile sur un ou des rails 32 solidaires de la chambre de résonance 1. La taille des entrées des arrivées d'air 9 varie avec le coulissement à frottement du chariot 31 sur le ou les rails 32, le manchon 29 fixé à la conduite allongée 4 s'enfonçant plus ou moins profondément sur ladite conduite allongée 4 en réglant la distance entre la première ouverture 8' de la chambre à solitons 8 et l'extrémité 4' de la conduite allongée 4, l'espace entre le manchon 29 et la conduite allongée 4 faisant ainsi office de passage communiquant avec l'extérieur, dont l'ouverture peut aussi être contrôlée par les éléments 33 réalisés, par exemple, sous la forme d'un autre manchon conique qui peut être déplacé par coulissement ou par rotation hélicoïdale sur la conduite allongée 4.

L'organe d'aspiration pulsante 10 et l'accélérateur de débit 30 («Venturi» ou autre à débit variable), accolés à la première ouverture 8' de la chambre à solitons 8 de manière étanche, sont fixés au support commun à savoir, le chariot 31 se déplaçant sur les rails 32. L'organe d'aspiration pulsante 10 est alimenté par un ventilateur ou une turbine soufflante 37 ou bien encore son mouvement est entretenu par la réaction une fois activée ou par un tirage statique du type de celui d'une cheminée. Le divergent de l'organe d'aspiration pulsante 10 est équipé d'un moyen d'assistance à l'allumage 12 par bougie ou électrodes.

Le dispositif selon la présente invention est également caractérisé en ce qu'au moins un dispositif 18 est prévu pour le brassage de la ou des matières M solides introduites dans ladite chambre de résonance 1.

Un tel dispositif 18 de brassage de la matière peut être, par exemple, un moyen de brassage oscillant à bras, à palettes longitudinales, etc., dont les axes partiels 18' peuvent être situés au centre dans l'axe de la chambre de résonance 1 (cf. figure 8) et qui communiquent avec l'extérieur pour y être entraînés par un dispositif motorisé (non représenté) générateur du mouvement oscillant du dispositif 18 de brassage par l'intermédiaire de pignons, de bielles, de moyens hydrauliques ou tout autre moyen adapté. Des moyens de commande manuels ou automatiques peuvent également équiper tous les organes mobiles précités et un centre de contrôle et de gestion informatique relié à des capteurs situés aux endroits stratégiques peut, en outre, être prévu pour commander les mouvements des organes de réglages susvisés.

La ou les matières M approvisionnées par charges successives sont placées dans la trémie 14 fixe. La porte supérieure 15 est ensuite fermée, l'ouverture de la double porte inférieure 16 laissant passer les matières M dans la chambre de résonance 1. La porte inférieure 16 refermée, on peut recharger la trémie 14 pour un nouveau cycle d'approvisionnement de la chambre de résonance 1.

Lorsque la chambre de résonance 1 est chargée d'une quantité suffisante de matières M, on procède à l'allumage de manière classique. En particulier, il est possible d'ajouter des matières facilement inflammables à la première charge (papier, carton...) pour faciliter cet allumage. L'allumage étant effectué, la turbine soufflante 37 et, par voie de conséquence, l'accélérateur de débit 30 sont mis en action ainsi que le moyen d'assistance à l'allumage 12. Pour activer rapidement l'allumage on ouvre totalement le réglage du dispositif acoustique 7. L'accélérateur de débit 30 est réglé au plus bas en corrélation avec les arrivées d'air 9 largement ouvertes de la chambre à solitons 8 et avec la première ouverture 8' rapprochée de l'extrémité 4' de la conduite allongée 4.

Lorsque la masse est bien enflammée, le dispositif 18 de brassage est actionné, soit à vitesse lente et de manière continue, soit de manière plus rapide mais intennittente. Dès que l'allumage proprement dit est réalisé, on referme progressivement le passage d'air du dispositif acoustique 7 de sorte à faire monter progressivement la dépression en même temps que s'établit le régime pulsatoire. Peu de temps après l'apparition du brouillard au niveau de l'accélérateur de débit 30, la flamme s'établit dans le divergent du « Venturi ». Lorsque la flamme est stabilisée, le moyen d'assistance à l'allumage 12 peut être arrêté. Le débit augmentant par l'allumage général de la chambre de résonance 1, on suit la progression de la flamme rayonnante par des manoeuvres appropriées, telles que réglage du dispositif acoustique 7 vers son point de fonctionnement minimum, augmentation de la distance première ouverture 8'/sortie 3 (ou de la distance première ouverture 8'/extrémité 4'), ajustage de l'entrée des arrivées d'air 9 et montée en puissance de l'accélérateur de débit 30 jusqu'à établir le débit qui correspond à la vitesse de conditionnement dans la chambre de résonance 1.

En effet, si la vitesse d'écoulement au « Venturi » est trop lente par rapport à la vitesse de conditionnement dans la chambre de résonance 1, le champ de particules est saturé et plus lourd, l'impulsion de vitesse au passage de la première ouverture 8' insuffisante laissant apparaître des $C_xH_y$ imbrûlés. Si au contraire la force de dépression appliquée par l'accélérateur de débit 30 est trop élevée ou que l'entrée des arrivées d'air 9 est trop restreinte, le renforcement des amplitudes de contraction due aux libérations de l'hydrogène est mal compensé et la piézoélectricité se remarque par l'apparition de $SO_2$ et d'oxydes d'azote $NO_x$. Le mauvais réglage se traduit également par un encrassement de la conduite allongée 4 et/ou une production de goudrons dans la chambre à solitons 8. Le défaut peut être le seul fait d'un déficit en oxygène mesuré dans les rejets. Dans ce cas, il est imputable à l'ouverture des arrivées d'air 9 et à la force appliquée par le « Venturi » laquelle doit rester assez forte pour favoriser la réflexion d'onde en forme de recirculation.

Dans le même temps on a rechargé la trémie 14 et, à mesure que la charge de la chambre de résonance 1 diminue, on ouvre les portes inférieures 16 pour introduire une nouvelle charge dans la chambre de résonance 1. Les portes inférieures 16 se referment et un nouveau cycle peut commencer selon la vitesse de transformation régnant dans ladite chambre de résonance 1.

Les déchets hétéroclites, tels que les déchets ménageras, ainsi que les pneumatiques peuvent comporter des parties métalliques telles que des armatures et autres qui émergent de la masse plus cohérente de matière à l'instar de gros graviers émergeant d'un tas de sable et retombant sur les bords dudit tas qui en l'occurrence correspond au centre des amplitudes du brassage de la masse en profondeur par les pales. Il en est de même pour les cendres. Lorsque la quantité de matières imbrûlées accumulées dépasse une certaine limite, il faut procéder à leur enlèvement. Cette opération peut être programmée ou s'effectuer à tout moment, le conteneur d'évacuation étant solidaire de la chambre de résonance 1. Pour cela on ouvre la porte coulissante 58, le moyen de préhension 61 (grappin, griffe ou pince articulée télescopique) ratisse les matières déposées et ramène les cendres vers le cendrier 56 prévu à cet effet. Ensuite il saisit, secoue ou fait vibrer les matières récupérées pour éliminer les adhérences et vient les déposer dans un conteneur de refroidissement 62 en attendant leur évacuation définitive. L'ouverture ou la trappe 55 du cendrier 56 pourra se trouver préférentiellement sous l'orifice 6 en raison de l'effet de précipitation induit à ce niveau par le filet d'air frais venu du dispositif acoustique 7.

Suivant la nature des déchets, certains évoluant plus vite en phase de dissociation ou produisant plus de chaleur, il peut être nécessaire de refroidir la réaction. A cette fin, la paroi de la chambre de résonance 1 peut être doublée d'un revêtement l'isolant, par exemple une lame d'eau reliée à une source froide quelconque.

Les figures 9 et 10 représentent un autre mode de réalisation du dispositif selon l'invention, caractérisé par la mise en mouvement de la chambre de résonance 1 pour obtenir un brassage des matières dans des chambres de grandes dimensions adaptées au traitement et aux conditions de manutention des déchets solides hétéroclites contenant, par exemple des hydrocarbures.

Le dispositif représenté auxdites figures est caractérisé en ce que la chambre de résonance 1 contient des matières solides pondérales, déposées au fond de cette dernière. Ces matières étant statiques, elles sont ensuite brassées ou remuées pour assurer l'entretien et la régularité de la réaction de transformation.

Le dispositif représenté comprend une chambre de résonance 1 munie d'une conduite allongée 4 et d'une chambre acoustique 5 pourvue d'un orifice 6 et est aménagée pour recevoir la matière dans sa partie basse sur un revêtement l'isolant, réfractaire ou simplement une double paroi de l'enveloppe extérieure, l'axe d'alignement de la conduite allongée 4 et de l'orifice 6 étant excentré vers le haut de la chambre de résonance 1 qui comporte sur sa face externe inférieure une ou plusieurs bandes 63 de roulement et des galets 64 de roulements positionnés en fonction de l'axe de rotation défini par l'axe conduite allongée 4-orifice 6 par rapport à l'axe de la chambre de résonance 1.

La conduite allongée 4 est constituée d'un tuyau ouvert aux deux extrémités, l'une raccordée de manière étanche sur un côté de la chambre de résonance 1 et l'autre constituant l'extrémité 4' entrant dans la chambre à solitons 8 (l'organe d'aspiration pulsante 10 et ses accessoires n'est que suggéré sur cette vue) à l'opposée de sa première ouverture 8'.

Dans le cas de dispositifs selon l'invention conçus pour le traitement de matières pouvant être humides comme les ordures ménagères ou les boues d'épuration et être sujettes à des condensations prématurées, dans le cas de dispositifs de très grandes dimensions, c'est-à-dire pour un rapport :

$$\frac{\text{longueur de la chambre de résonance 1}}{\text{longueur de la ou des conduites allongées 4}} > 1,$$

ou, dans le cas d'une conduite allongée 4 de sections supérieure à 0,20 m$^2$ pour un rapport

$$\frac{\text{longueur de la chambre de résonance 1}}{\text{longueur de la ou des conduites allongées 4}} > 0,25,$$

et avec des flux de matière M sensibles aux effets de parois qui seraient amplifiés par le contact avec de l'air plus frais circulant en sens inverse, dans le cas de l'utilisation de fluides légers ou gazeux avec une ou des conduites allongées 4 spéciales dans lesquelles on limite le reflux de matière M qui serait entraîné par la recirculation de l'air depuis la chambre à solitons 8 vers la chambre de résonance 1, au moins un guide de recirculation 26 de section inférieure à celle de la ou des conduites 4 est prévu au moins en partie à l'intérieur de ladite ou desdites conduites allongées 4, par exemple sous la forme d'un manchon allongé débouchant dans la chambre de résonance 1.

Comme illustré sur la figure 9, ce guide de recirculation 26 délimite l'espace de recirculation de l'air de compensation de la dépression de la chambre de résonance 1. Un manchon 29 destiné à faciliter le réglage du fonctionnement de la chambre à solitons 8 est fixé sur la conduite allongée 4 de la chambre de résonance 1 pour former un passage pour les arrivées d'air 9 entre lui-même et la face externe de ladite conduite allongée 4.

Un renforcement extérieur à la conduite allongée 4 au ras de la chambre de résonance 1 constitue un axe de mouvement à l'intérieur d'un palier 65.

Par ailleurs, l'ouverture d'alimentation 13 en matières M de la chambre de résonance 1 est fermée par un panneau coulissant 15" à ouverture commandée ou automatique. Le moyen d'alimentation 2 est avantageusement constitué par une trémie 14 fermée par une porte supérieure 15 de chargement et une porte inférieure 16 de déchargement à deux battants et est réalisé solidaire d'un dispositif de positionnement lui-même solidaire du bâti 66, tous les mouvements pouvant être commandés manuellement ou automatiquement.

Le dispositif illustré aux figures 9 et 10 peut également comprendre une ou plusieurs sorties 54 réalisées, par exemple, sous la forme d'un cendrier 56 fermé par une trappe 55 donnant sur l'extérieur pour une éventuelle vidange. Une deuxième sortie 54 par une porte coulissante 58 donne sur un sas étanche 56' vis-à-vis de l'extérieur et muni d'une seconde porte coulissante 58' faisant face à la porte coulissante 58, de sorte à se trouver à l'horizontale lors de la position basse de décharge (cf. figure 10).

Un moyen de préhension 61 télescopique équipe le sas étanche 56'. Un conteneur de refroidissement 62 étanche est relié par un tuyau flexible au sas étanche 56', dont la porte coulissante 58 comporte un évent spécial 59 ouvert en permanence sur la chambre de résonance 1.

La chambre acoustique 5 est munie de son dispositif acoustique 7, dont l'orifice 6 est conformé, dans une forme d'utilisation non limitative, pour constituer un axe de mouvement à l'intérieur d'un palier 65. La chambre à solitons 8, située en avant de la conduite allongée 4 et dans son axe, est fixée à un chariot 31 lequel est porté par un ou plusieurs rails 32 qui sont solidaires du bâti 66 de façon à ce que ladite chambre à solitons 8 puisse coulisser sur le manchon 29 solidaire de la conduite allongée 4 de la chambre de résonance 1 pour le réglage de la distance entre la première ouverture 8' de cette chambre à solitons 8 et l'extrémité 4' de la conduite allongée 4, l'espace entre le manchon 29 et la conduite allongée 4 faisant office de passage d'air pour les arrivées d'air 9, dont la section peut être contrôlée par des éléments 33, par exemple, un autre manchon conique réglable par coulissement ou encore par rotation hélicoïdale sur la conduite allongée 4.

L'organe d'aspiration pulsante 10, l'accélérateur de débit 30 à débit variable (« Venturi », turbine adaptée, moteur...) est accolé à la première ouverture 8' de la chambre à solitons 8 de manière étanche, l'organe d'aspiration pulsante 10 étant fixée, avec ladite chambre à solitons 8, au support commun (chariot 31). Il est alimenté par une turbine soufflante 37 et éventuellement équipé d'un moyen d'assistance à l'allumage 12, par bougie ou électrodes selon le besoin.

Le ou les rails 32 solidaires du bâti 66 comportent un dispositif de réglage de la course entre la première ouverture 8' et la sortie 3 (ou l'extrémité 4' de la conduite allongée 4 qui définit le point de référence de la demi-onde du flux qui guide la position de la première ouverture 8' de la chambre à solitons 8).

Le dispositif comporte également des bandes 63 de roulement et des galets 64 de roulement pour le support berceau de la chambre de résonance 1, solidaires d'un bâti 66 fixe qui comporte les paliers 65 et la base de support de la chambre à solitons 8 mobile. Un dispositif générateur du mouvement oscillant de la chambre de résonance 1 est également prévu ainsi que des moyens de commande des organes mobiles, un centre de contrôle et de gestion informatique relié à des capteurs situés aux endroits stratégiques et aux organes de réglages.

Les matières approvisionnées par charges successives sont placées dans la trémie 14 fixe, la porte supérieure 15 étant ensuite fermée. Par son mouvement de balancement autour de l'axe de la conduite allongée 4 et de l'orifice 6 dans les paliers 65, la chambre de résonance 1 présente son panneau coulissant 15" en face de la porte inférieure 16 de la trémie 14 et déclenche un verrou d'arrimage qui bloque le mouvement de la chambre de résonance 1. Le panneau coulissant 15" s'ouvre pour permettre l'ouverture de la double porte inférieure 16 de la trémie 14. La ou les matières M tombent dans la chambre de résonance 1. Les portes se referment dans l'ordre inverse. Lorsque le déchargement des déchets est terminé, le déverrouillage général libère la chambre de résonance 1.

Lorsque la chambre de résonance 1 est chargée d'une quantité suffisante de matières M, on procède à l'allumage et à la mise en route comme précédemment expliqué.

Dans le cas d'un déclenchement du blocage réglé sur, par exemple six oscillations (temps estimé pour la disparition d'une quantité de matière traitée dans la chambre de résonance 1), le panneau coulissant 15" se présente en face de la trémie 14, le verrou arrime la chambre de résonance 1 et stoppe la force motrice du mouvement oscillant. La trémie 14 descend en place, le panneau coulissant 15" et la porte inférieure 16 s'ouvrent successivement, la charge glisse draps la chambre de résonance 1, les portes se referment en sens inverse, le déverrouillage libère l'ensemble mobile, la source motrice d'oscillation est réactivée et ainsi de suite en fonction de la programmation dépendant de la consommation de matières M dans ladite chambre de résonance 1.

Les déchets hétéroclites, tels que les déchets ménagers, ainsi que les pneumatiques peuvent comporter des parties métalliques telles que des armatures et autres qui émergent de la masse plus cohérente de matière à l'instar de gros graviers émergeant d'un tas de sable et retombant sur les bords dudit tas qui en l'occurrence correspond au centre des amplitudes du brassage de la masse en profondeur par les pales. Il en est de même pour les cendres. Lorsque la quantité de matières imbrûlées accumulées dépasse une certaine limite, il faut procéder à leur enlèvement. Cette opération peut être programmée ou s'effectuer à tout moment, le sas étanche 56' d'évacuation étant solidaire de la chambre de résonance 1. Pour cela on ouvre la porte coulissante 58, le moyen de préhension 61 (grappin, griffe ou pince articulée télescopique) ratisse les matières déposées et ramène les cendres vers le cendrier 56 prévu à cet effet. Ensuite il saisit, secoue ou fait vibrer les matières récupérées pour éliminer les adhérences et vient les déposer dans un conteneur de refroidissement 62 en attendant leur évacuation définitive.

L'ouverture ou la trappe 55 du cendrier 56 pourra se trouver préférentiellement sous l'orifice 6 en raison de l'effet de précipitation induit à ce niveau par le filet d'air frais venu du dispositif acoustique 7. Lorsque la chambre de résonance 1 est en position de chargement, le sas étanche 56' se trouve à la verticale du conteneur de refroidissement 62. Profitant de l'arrêt pour le chargement, le conteneur de refroidissement 62 est soulevé par exemple par des moyens hydrauliques pour se coller contre ledit sas étanche 56'. La seconde porte coulissante 58' et la porte de déchargement 60 l'une en face de l'autre s'ouvrent et les déchets du sas étanche 56' tombent dans le conteneur de refroidissement 62. Les portes se referment et les deux opérations conjointes sont effectuées sans interrompre le fonctionnement de la réaction, le mouvement de l'ensemble pouvant reprendre et se poursuivre de la sorte de manière répétitive. Le cendrier 56 étant indépendant, il est possible de le vider dans un conteneur annexe prévu à cet effet au cours d'un arrêt de chargement. Il en est de même pour l'entretien de la chambre acoustique 5.

Selon la nature des déchets, certains évoluant plus vite en phase de dissociation ou produisant plus de chaleur, il est nécessaire de refroidir la réaction. Pour cela la paroi de la chambre de résonance 1 peut être doublée d'un revêtement l'isolant, par exemple, une lame d'eau reliée à une source froide quelconque.

Selon un mode particulièrement avantageux, la ou les trémies 14 peuvent être déplacées au-dessus des ouvertures d'alimentation 13 de la chambre de résonance 1, d'une ouverture d'alimentation 13 à une autre ouverture d'alimentation 13.

Les dispositifs décrits aux figures 1, 2, 7 et 8 sont susceptibles d'être utilisés avec diverses matières M, y compris celles désignées sous le terme général de matières plastiques qui pour la plupart fondent sous l'effet de la chaleur avant d'entrer en combustion. Cette propriété constitue un obstacle à la mise en oeuvre des matières plastiques dans les dispositifs cités dans la mesure où la charge de la chambre de résonance 1 fond toute entière et produit dans ce cas un champ de matières saturé qui dépasse la capacité de la machine.

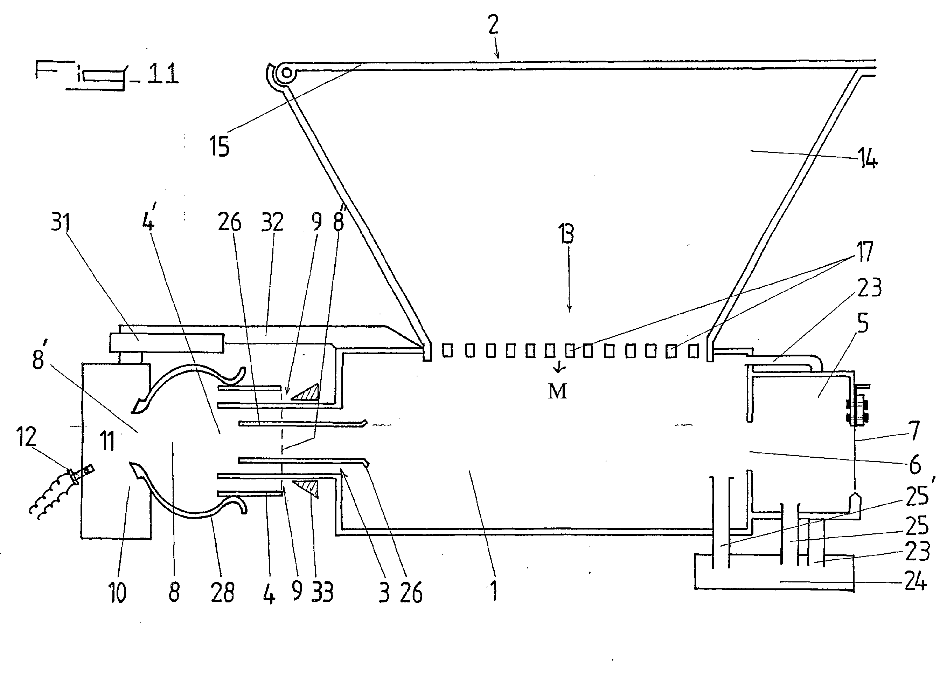

Si l'on veut traiter ces matériaux en continu il faut d'abord disposer d'une alimentation adaptée, ce qui pose un problème technique de manutention parce que les stocks de ces déchets sont souvent constitués de pièces imbriquées de grandes tailles qui sont difficiles à morceler ou à calibrer. Ensuite il faut faire cohabiter dans la chambre de résonance 1 des états liquides et solides, ce qui pose un problème de fluctuation de la qualité du champ de matières conditionné. On résout le problème avec une paroi supérieure de la chambre de résonance 1 réalisée sous la forme d'une grille 17 constituant le fond de la trémie 14 et en prévoyant une trémie 14 de grande dimension (cf. figure 11). Dans ce cas, on peut se contenter d'une chambre de résonance 1 plus restreinte. Comme c'est la chaleur de la chambre de résonance 1 qui, transmise à la masse de matières M dans la trémie 14 à travers ladite grille 17, fait fondre ou brûler celle-ci le débit est bien fonction de la dimension de la chambre de résonance 1 et sera facile à ajuster au besoin même par une source de chaleur extérieure.

La grille 17 est également intéressante lorsque l'on utilise du bois comme matière M, le dispositif selon l'invention, équipé de sorties de déchets adéquates, constituant également un dispositif brûleur des gaz issus de la transformation du bois.

La figure 1 montre un dispositif selon l'invention conformé pour la mise en oeuvre de matières M solides (bois, matières plastiques...) dans des dispositifs domestiques ou industriels caractérisé en ce qu'une ou plusieurs parois de la chambre de résonance 1 est ou sont constituée(s) d'une ou plusieurs grilles 17 et en ce que ladite chambre de résonance 1 est munie de dispositifs supplémentaires (ou de leurs variantes) d'extraction de trop-plein ou de déchets, par exemple tels que ceux représentés sur les figures 1 et 2.

Le dispositif illustré comprend des moyens d'alimentation 2 de la chambre de résonance 1 constitués d'une trémie 14 de grande dimension munie d'une porte supérieure 15 et comportant une grille 17 pouvant être mobile et réglable au lieu d'une porte inférieure 16. La chambre de résonance 1 comporte, en outre, des moyens de collecte 24 et d'évacuation 25, 25' des cendres. Ces moyens peuvent être des cendriers ainsi que des moyens d'évacuation de trop-plein par tuyaux dont les orifices sont situés à des niveaux adaptés et qui sont reliés à un réservoir central muni d'un évent 23.

Le dispositif selon cette variante fonctionne de la manière suivante : la ou les matières M sont placées dans la trémie 14 qui est enflammée sous la grille 17 dans la chambre de résonance 1. S'il s'agit de matières plastiques celles-ci sont auparavant fondues par un dispositif de chauffage appliqué au bas de la trémie 14 de sorte que ces matières M coulent dans la chambre de résonance 1 où on les enflamme de manière classique. Lorsque la combustion classique est amorcée, on actionne l'organe d'aspiration pulsante 10.

L'aspiration pulsante qui en résulte agit sur la chambre à solitons 8, est transmise à la chambre de résonance 1 par la conduite allongée 4 et, par la chambre acoustique 5, jusqu'au dispositif acoustique 7 qui réagit en imprimant une vibration au système pulsant. Le régime pulsatoire macroscopique doublé de l'effet vibratoire transmis par la chambre acoustique 5 conditionne les espèces ou agrégats issus de la première dissociation sous forme de champ ou de brouillard. Le champ de particules ou brouillard est aspiré par la conduite allongée 4, se présente au plan nodal au niveau de la première ouverture 8' pour subir l'accélération complétée par le moyen d'assistance à l'allumage 12 qui ionise le champ. Les paramètres de distance extrémité 4'/première ouverture 8', arrivées d'air 9 et débit sont ajustés en fonction de l'objectif à atteindre par l'organe d'aspiration pulsante 10. Si du bois est mis en oeuvre, la capacité de la trémie 14 assure une grande autonomie, un évent 23 dont l'origine est au niveau de la chambre de résonance 1 assurant la régulation de la pression lorsque la porte supérieure 15 de ladite trémie 14 est fermée.

Le moyen de collecte 24 peut être un cendrier positionné en conséquence dans lequel les cendres sont évacuées selon le besoin. La conduite de la chauffe est régie par les contrôles de la distance entre la première ouverture 8' et l'extrémité 4', des arrivées d'air 9, du débit au niveau de la première ouverture 8', ce de manière manuelle ou automatique. Si les matières M sont des matières plastiques, la trémie 14 de grande dimension évite les retours de gaz ou de fumées par le tampon de matières. Le cendrier est préférentiellement placé sous l'orifice 6 pour recevoir les précipitations des charges minérales, les moyens d'évacuation 25, 25' assurant la régularité du fonctionnement.

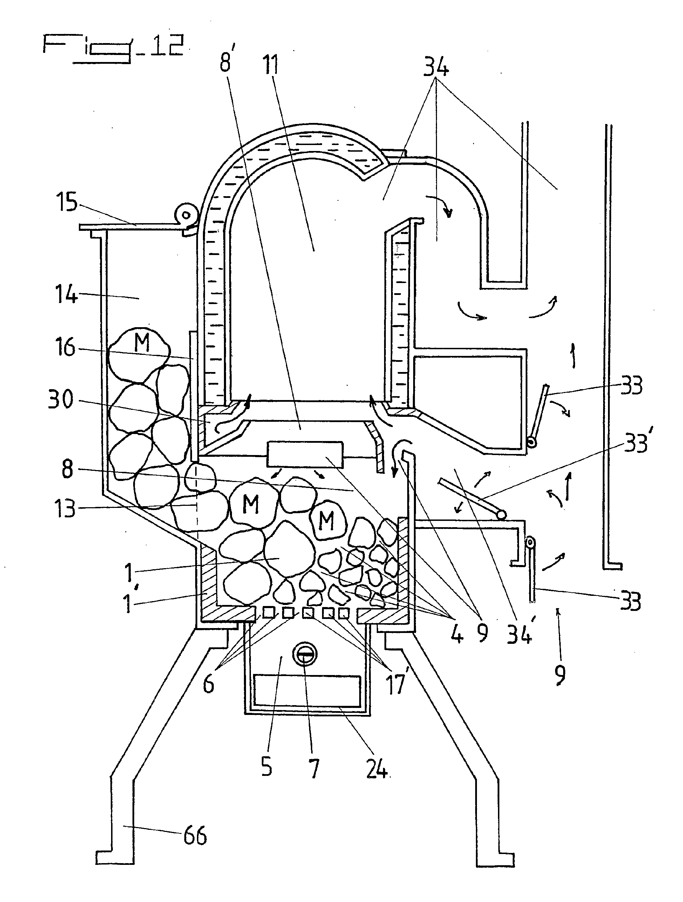

Enfin, on décrira encore, également à titre d'exemple non limitatif, une dernière variante avantageuse du dispositif selon l'invention. La figure 12 représente un dispositif selon l'invention qui est activé par des moyens statiques pour la production de chaleur à partir de matières solides.

Le dispositif illustré sur la figure 12 est conformé pour être activé par un organe d'aspiration pulsante 10 fonctionnant de manière statique et est conformé verticalement pour être soumis à l'action d'un canal d'écoulement vertical.

Il est constitué d'une chambre de résonance 1 disposée verticalement, de conduites allongées 4 (virtuelles) disposées à la limite de la zone définissant ladite chambre de résonance 1 et d'une chambre acoustique 5 disposée en dessous de ladite chambre de résonance 1 avec laquelle elle communique par ces conduites allongées 4 et des orifices 6 à travers une grille 17'. Une chambre à solitons 8 reliée à un canal d'évacuation vertical par sa première ouverture 8' est située au-dessus de la chambre de résonance 1 à laquelle elle est reliée par sa conduite allongée 4 et se trouve en communication avec l'extérieur par une ou plusieurs arrivées d'air 9 de sections au moins égales à celles de l'organe d'aspiration pulsante 10, c'est-à-dire le conduit statique de fumées 34, de sorte à compenser son effet. En raison de la position verticale de la chambre de résonance 1, la trémie 14 d'approvisionnement, fermée à son entrée par une porte supérieure 15 et à sa sortie par une porte inférieure 16 coulissante est située latéralement par rapport à la chambre de résonance 1 dont la ou les ouvertures d'alimentation 13 sont situées vers le bas. Un doublage de protection ou revêtement 1' reçoit et contient les matières pondérales sur une grille 17' placée au-dessus de la chambre acoustique 5 équipée d'un dispositif (ajutage) acoustique 7, les orifices 6 au travers de la grille 17' faisant office de pincement. Au-dessus du bord supérieur de ce revêtement 1' sont situés un ou plusieurs éléments 33 pour réguler les débits des arrivées d'air 9. Le dispositif est supporté par un bâti 66 de sorte que les arrivées d'air 9 et le dispositif acoustique 7 soient librement alimentés par l'atmosphère extérieure. Dans une variante, la paroi de la chambre de résonance 1 peut être équipée d'une lame d'eau de sorte à distribuer la chaleur, par exemple sur des radiateurs.

Le dispositif illustré à la figure 12 fonctionne comme suit : la ou les matières M sont placées dans l'enceinte du doublage du fond de la chambre de résonance 1 à partir d'une des ouvertures d'alimentation 13, directement de l'extérieur ou à partir de la trémie 14. Le canal d'évacuation est ouvert, relié par l'espace 11 d'ionisation à la première ouverture 8' de la chambre à solitons 8 elle-même reliée à l'extérieur par les arrivées d'air 9 dont l'ouverture est réduite par le réglage des éléments 33, alors que la dérivation 34' est fermée par son élément 33'. L'ajutage acoustique de la chambre acoustique 5 est ouvert au maximum. On allume la charge de matières M au besoin avec du papier et du petit bois. La circulation directe engendrée par la pleine puissance de tirage de l'organe d'aspiration pulsante 10 (constitué par la conduite statique de fumées 34) qui n'est pas compensée en raison de la réduction par le réglage des arrivées d'air 9 provoque une mise en feu très rapide de la charge de matières M.

De grandes flammes chargées se développent à la limite de la chambre de résonance 1 aux débouchés des conduites allongées 4 et, conformément au dispositif de la figure 1 reproduit ici en position verticale, une flamme claire bleutée tend à s'établir après le plan nodal au niveau de la première ouverture 8' dans l'espace d'ionisation 11 soumis aux effets de l'organe d'aspiration pulsante 10 constitué par la conduite statique de fumées 34.

L'ajutage est réglé à sa position de passage minimum qui fait résonner la chambre acoustique 5 dont la dépression engendre une recirculation des espèces dissociées au niveau de la grille 17' par les orifices 6.

Le réglage des éléments 33 des arrivées d'air 9 est alors ouvert en totalité. Le flux d'air fourni à la chambre à solitons 8 se répartit entre la première ouverture 8' réduisant l'aspiration de la conduite statique de fumées 34 et les conduites allongées 4 où la recirculation vient compenser la forte dépression engendrée par l'action initiale de ladite conduite statique de fumées 34 augmentée par la réduction extrême du dispositif acoustique 7.

Tout se passe comme si on avait déplacé la conduite allongée 4 de la chambre de résonance 1 vers les interstices existant entre les morceaux irréguliers de matière(s) M placée(s) dans le fond de la chambre de résonance 1 sur la grille 17'. La flamme s'établit à la limite de la charge au droit des interstices formant cols et l'effet de recirculation depuis la chambre à solitons 8 par les arrivées d'air 9 limite son développement à mi-hauteur de l'espace entre la charge et les lèvres du passage du dispositif accélérateur de débit ou « Venturi » 30 de la chambre de résonance 1.

Sous l'effet vibratoire orienté de la chambre acoustique 5, la masse interne des matières M placées sur le revêtement 1' et la grille 17' rougeoie et forme de la braise, l'objectif recherché est atteint et la chaleur est produite à l'intérieur de la chambre de résonance 1 dont les parois rayonnent vers l'extérieur. Cependant les flammes conservent une apparence classique même si elles sont claires et bleutées et que l'oxydation est déjà très réduite par rapport à un système classique. Ceci est dû à un excès de force d'aspiration de l'organe d'aspiration pulsante 10 qui n'est que partiellement compensé à la première ouverture 8' par une partie du flux délivré à la chambre à solitons 8 par les arrivées d'air 9, l'autre partie circulant en contresens par les orifices 6 pour tendre à rééquilibrer partiellement la pression dans la chambre acoustique 5.

Il en résulte un effet de contraction renforcée au niveau de la masse de matières en transformation de nature à provoquer des effets piézoélectriques facteurs de décohérence partielle qui agissent négativement sur la qualité d'ionisation qui n'est plus totale.

Pour parfaire la réaction et obtenir un maximum de rayonnement dans l'espace 11 d'ionisation avec une qualité d'ionisation équivalente à celle du dispositif de la figure 1, il convient de réduire la dépression régnant dans la chambre de résonance 1 au plus près de la pression atmosphérique.

La dégravitation locale du champ due aux forces de Van der Waals soumis aux vibrations acoustiques de la chambre acoustique 5 est alors suffisante pour transformer la masse de matières en braises à haute fréquence de rayonnement avec seulement de petites flammes. Ce résultat est obtenu par l'ouverture du réglage des éléments 33' de la dérivation 34' du canal trouvant son origine dans les arrivées d'air 9. L'ionisation devient totale, le rayonnement maximum, la transformation des matières en est ralentie et les espèces rejetées ne comportent plus d'oxydes.

Il est à noter que l'utilisation de la trémie 14 favorise en continu la qualité du traitement dans la mesure où les matières M solides sont préchauffées avant leur arrivée sur la grille 17'.

Les dispositifs selon la figure 2 et, sous réserve de l'ajout d'un cendrier adapté (par exemple un cendrier 56) ainsi que de moyens d'évacuation reliés à un moyen de collecte et un évent (par exemple les moyens d'évacuation 25, 25' reliés au moyen de collecte 24 et à l'évent 23), ceux des figures 7 à 11, sont aptes à produire des matières nobles.

Largement ouvert sur la chambre de résonance 1, le nuage ou champ de matières en suspension vient d'autant plus circuler dans le volume du cendrier 56 que celui-ci est plus grand et plus froid. En forçant la vitesse au niveau de l'accélérateur de débit 30 et en ouvrant le passage au niveau du dispositif acoustique 7 (par exemple à l'ajutage) sans toutefois supprimer l'effet acoustique, on obtient un facteur de condensation et de précipitation au voisinage du passage de l'orifice 6 qui s'amplifie dans le volume froid du cendrier 56.

Par un autre effet, toutes les chambres à solitons 8 sont aptes à produire des condensats récupérables par un écoulement au bas de ladite chambre à solitons 8, par exemple au moyen d'une conduite reliée à un réservoir.

Par contre, au niveau des chambres à solitons 8 qui exigent de renforcer la pression au «Venturi» et la contraction à la conduite allongée 4, on produit plutôt des cristaux liquides alors que le cendrier 56 produit de l'huile plus ou moins visqueuse au choix. Les condensats produits par la chambre à solitons 8 sont généralement chargés en agrégats et en cristaux solides du type fullerènes qui ne conviennent pas aux moteurs à explosion habituels, en raison de la présence de cristaux de carbone pur sous forme de diamants microscopiques qui usent les segments et les chemises.

La présente invention a également pour objet un procédé d'ionisation ou de transformation de la matière utilisant un dispositif selon l'invention, caractérisé en ce qu'il comprend les étapes consistant à :

- mettre en marche l'organe d'aspiration pulsante 10 ainsi qu'éventuellement un moyen d'assistance à l'allumage 12,
- introduire la ou les matières M à ioniser ou à transformer dans la chambre de résonance 1,
- si nécessaire, mettre en route une combustion préliminaire classique de la ou des matières M précédemment introduites,
- conditionner la ou les matières M dans un état vibratoire stationnaire, cohérent et semi-condensé, à l'aide du dispositif acoustique 7 et de l'organe d'aspiration pulsante 10,
- après plusieurs allées et venues dans la chambre de résonance 1, aspirer la ou les matières M conditionnées via la ou les conduites allongées 4 à la sortie de laquelle ou desquelles, l'onde du flux de matières M sortant est génératrice d'une réflexion de cette onde incidente sous forme d'une onde réfléchie constituée d'un flux d'air qui remonte la ou les conduites allongées 4 pour venir compenser la pression négative dans la chambre de résonance 1 et y entretenir les réflexions entre les faces miroir,
- ajouter de l'air externe à la ou aux matières M conditionnées débouchant de la ou des conduites allongées 4 au moyen des arrivées d'air 9 situées à proximité de ladite ou desdites conduites allongées 4, et
- ioniser la ou les matières M conditionnées éventuellement avec l'aide d'un moyen d'assistance à l'allumage 12.

Le procédé selon l'invention est également caractérisé en ce qu'il comprend, en outre, une étape d'optimisation de la réaction après l'étape d'ionisation de la ou des matières M conditionnées en réglant l'un ou plusieurs des paramètres suivants : ouverture du dispositif acoustique 7, puissance de l'organe d'aspiration pulsante 10, débit d'air entrant par les arrivées d'air 9, position des arrivées d'air 9 par rapport au plan nodal de la ou des conduites allongées 4 ou d'un autre plan nodal du dispositif, distance séparant la seconde ouverture 8" de la ou des sorties 3 de la chambre de résonance 1, ajustage de la longueur de la ou des conduites allongées 4, ce afin d'adapter le régime de la réaction d'ionisation de la ou des matières M à la vitesse de conditionnement desdites matières M dans la chambre de résonance 1.

Selon une autre caractéristique, on mesure les concentrations en $SO_2$, en $C_xH_y$, en $NO_x$ ou en $O_2$, de l'air rejeté par le dispositif selon la présente invention afin de déterminer le réglage de l'un ou plusieurs des paramètres suivants : puissance de l'organe d'aspiration pulsante 10, position des arrivées d'air 9 par rapport au plan nodal de la ou des conduites allongées 4 ou d'un autre plan nodal du dispositif, débit d'air entrant par les arrivées d'air 9, distance séparant la première ouverture 8' de la ou des sorties 3 de la chambre de résonance 1, ajustage de la longueur de la ou des conduites 4, réglage du dispositif acoustique 7, ce afin d'optimiser la réaction d'ionisation de la ou des matières M jusqu'à obtenir une concentration en $O_2$ dans le flux des effluents qui soit au moins équivalente à la concentration atmosphérique et des concentrations en $SO_2$, en $C_xH_y$ et/ou en $NO_x$ nulles ou pratiquement nulles. Selon encore une autre caractéristique, on éteint le moyen d'assistance à l'allumage 12 lorsque la réaction d'ionisation de la ou des matières M se poursuit de manière autonome.

De manière avantageuse, on stocke l'énergie libérée par la ou les matières M dissociées et conditionnées avant leur ionisation sous la forme d'une ou plusieurs matières nobles par condensation avant l'ionisation de la ou des matière(s) créée(s) dans le ou les moyens de collecte 24 des condensats.

Le procédé selon la présente invention peut être utilisé pour la production d'énergie thermique, chimique et/ou mécanique. Comme expliqué ci-dessus, il peut également servir à la production de matières nobles. La présente invention a également pour objet un incinérateur, en particulier de déchets, un moteur thermique récologique, notamment pour véhicules, une turbine, un statoréacteur ainsi que des foyers et chaudières domestiques mettant en oeuvre le dispositif selon l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini dans les revendications.

**Revendications**

1.  Dispositif de production d'un plasma à partir d'une réaction de combustion d'une matière ou d'un mélange de matières M,

    muni d'une chambre de résonance (1) de type cavité de « Fabry-Perlot» destinée à créer une circulation stationnaire d'un flux de ladite ou desdites matières (M) avec au moins un moyen d'alimentation (2) et au moins une sortie (3) en forme de conduite(s) allongée(s) (4), **caracterisé en ce qu'**il comprend en outre :

    - une chambre acoustique (5) communiquant avec ladite chambre de résonance (1) par l'intermédiaire d'un orifice (6) et munie d'un dispositif acoustique (7) générateur d'harmoniques modulables, et
    - une chambre à solitons (8) de volume réglable, destinée à recevoir la matière conditionnée, à savoir dans un étant vibratoire stationnaire, cohérent et semi-condensé, sortant par la ou les conduites allongées (4) de la chambre de résonance (1) en même temps qu'elle génère vers cette chambre de résonance (1), par ladite ou lesdites conduites allongées (4), une recirculation d'air extérieur, ladite chambre à solitons (8) étant munie d'au moins une arrivée d'air (9) à débit réglable et ladite chambre à solitons (8) définissant, avec un organe d'aspiration pulsante (10) adjacent à la sortie de ladite chambre à solitons (8), un espace (11) de production de matière ionisée.

2.  Dispositif selon la revendication 1, **caractérisé en ce qu'**il comporte, en outre, au moins un moyen d'assistance à l'allumage (12) de la ou des matières (M) conditionnées dans l'espace (11) de la chambre à solitons (8).

3.  Dispositif selon la revendication 1 ou 2, **caractérisé en ce que** le ou les moyens d'alimentation (2) en matière(s) (M) de la chambre de résonance (1) consistent en au moins une ouverture d'alimentation (13) réalisée dans ladite chambre de résonance (1).

4.  Dispositif selon la revendication 3, **caractérisé en ce que** la ou les ouvertures d'alimentation (13) sont surmontées d'au moins une trémie (14) pouvant être munie d'une porte supérieure (15) de fermeture et d'une porte inférieure (16) de fermeture et/ou d'une grille (17) inférieure.

5.  Dispositif selon la revendication 4, **caractérisé en ce que** la ou les trémies (14) peuvent être déplacées au-dessus des ouvertures d'alimentation (13) de la chambre de résonance (1), d'une ouverture d'alimentation (13) à une autre ouverture d'alimentation (13).

6.  Dispositif selon l'une quelconque des revendications 1 à 5, **caractérisé en ce qu'**au moins un dispositif (18) est prévu pour le brassage de la ou des matières (M) solides introduites dans ladite chambre de résonance (1).

7.  Dispositif selon la revendication 1 ou 2, **caractérisé en ce que** le ou les moyens d'alimentation (2) consistent en un ou plusieurs dispositifs injecteurs et/ou nébulisateurs (19, 20) de la ou des matières (M), lesquelles peuvent éventuellement être préalablement traitées en vue d'obtenir une présentation appropriée auxdits dispositifs injecteurs et/ou nébulisateurs (19, 20).

8.  Dispositif selon la revendication 4, 5 ou 7, **caractérisé en ce que** la ou les trémies (14) ou le ou les dispositifs injecteurs et/ou nébulisateurs (19, 20) comprennent des moyens de chauffage (22) de la ou des matières (M) destinées à alimenter la chambre de résonance (1).

9.  Dispositif selon l'une quelconque des revendications 1 à 8, **caractérisé en ce que** la chambre de résonance (1) et/ou la chambre acoustique (5) et/ou la chambre à solitons (8) et/ou la ou les conduites allongées (4) sont, en outre, pourvues d'un ou plusieurs moyens de collecte (24) et/ou d'évacuation (25, 25') des trop-pleins, des résidus et/ou des condensats de combustion produits, lesdits moyens de collecte (24) et/ou d'évacuation (25, 25') pouvant être dotés d'évents (23), de moyens de protection thermique et/ou de refroidissement et/ou de chauffage et/ou confinement.

10. Dispositif selon la revendication 9, **caractérisé en ce que** le ou les moyens de collecte (24) sont disposés sous, et à proximité, de l'orifice (6) de la chambre acoustique (5).

11. Dispositif selon l'une quelconque des revendications 1 à 10, **caractérisé en ce que** les dimensions et la forme de la chambre acoustique (5) sont fonction de la distance entre ledit orifice (6) et ledit dispositif acoustique (7), cette distance étant elle-même accordée à la distance entre la ou les sorties (3) de ladite chambre de résonance (1) et ledit dispositif acoustique (7).

**12.** Dispositif selon la revendication 11, **caractérisé en ce que** la distance entre ledit orifice (6) et ledit dispositif acoustique (7) est un sous-multiple entier de la distance entre la ou les sorties (3) de ladite chambre de résonance (1) et ledit dispositif acoustique (7).

**13.** Dispositif selon la revendication 11 ou 12, **caractérisé en ce que** l'orifice (6), le dispositif acoustique (7) et une sortie (3) de la chambre de résonance (1) sont alignés.

**14.** Dispositif selon l'une quelconque des revendications 1 à 13, **caractérisé en ce que** le dispositif acoustique (7) est un ajutage acoustique ou une anche acoustique.

**15.** Dispositif selon l'une quelconque des revendications 1 à 14, **caractérisé en ce que** la ou les conduites allongées (4) sont de longueurs réglables, par exemple en étant réalisées sous la forme de tronçons télescopiques.

**16.** Dispositif selon l'une quelconque des revendications 1 à 15, **caractérisé en ce que** la section de la ou des conduites allongées (4) est inférieure à celle de la chambre de résonance (1) et supérieure à celle d'une première ouverture (8') de la chambre à solitons (8) qui est reliée à l'organe d'aspiration pulsante (10) de sorte que le flux de matières (M), qui tend à avoir la section de ladite première ouverture (8'), laisse au moins un espace annulaire pour l'introduction dans la ou les conduites allongées (4) de l'onde réfléchie constituée de l'air introduit par au moins une arrivée d'air (9) dans la chambre à solitons (8), lequel air remonte dans ladite ou lesdites conduites allongées (4) en direction de la chambre de résonance (1).

**17.** Dispositif selon la revendication 16, **caractérisé en ce qu'**au moins un guide de recirculation (26) de section inférieure à celle de la ou des conduites allongées (4) est prévu au moins en partie à l'intérieur de ladite ou desdites conduites allongées (4), par exemple sous la forme d'un manchon allongé débouchant dans la chambre de résonance (1).

**18.** Dispositif selon l'une quelconque des revendications 1 à 17, **caractérisé en ce que** la fréquence propre de la ou des conduites allongées (4) est choisie de manière à ce qu'elle résonne sur la fréquence fondamentale de l'onde circulante dans la chambre de résonance (1) et de manière à ce que l'onde réfléchie dirigée de la sortie de la ou des conduites allongées (4) vers la chambre de résonance (1) vienne composer un mode commun avec l'onde incidente pour favoriser le battement.

**19.** Dispositif selon l'une quelconque des revendications 1 à 18, **caractérisé en ce que** la chambre à solitons (8) présente une forme cylindrique ou quasi-cylindrique (27) comportant une première ouverture (8') pour le raccordement à l'organe d'aspiration pulsante (10) et une seconde ouverture (8") s'emboîtant sur la ou les conduites allongées (4) de la chambre de résonance (1) de manière à ce que l'espace restant entre ladite seconde ouverture (8") et ladite ou lesdites conduites allongées (4) forme au moins une arrivée d'air (9) pour ladite chambre à solitons (8).

**20.** Dispositif selon l'une quelconque des revendications 1 à 18, **caractérisé en ce que** la chambre à solitons (8) présente sensiblement une forme de cloche (28) évasée comportant, d'une part, une première ouverture (8') du côté du renflement destinée au raccordement à l'organe d'aspiration pulsante (10) et, d'autre part, une seconde ouverture (8") plus ou moins recourbée s'emboîtant sur la ou les conduites allongées (4) de la chambre de résonance (1) de manière à ce que l'espace restant entre ladite seconde ouverture (8") et ladite ou lesdites conduites allongées (4) forme au moins une arrivée d'air (9) pour ladite chambre à solitons (8).

**21.** Dispositif selon la revendication 20, **caractérisé en ce que** la seconde ouverture (8") de la chambre à solitons (8) est prolongée du côté de la ou des conduites allongées (4), par un manchon (29) de section supérieure à celle de la ou des conduites allongées (4) et de longueur égale à la moitié de la longueur de la ou des conduites allongées (4), ledit manchon (29) étant positionné de manière fixe sur l'extrémité terminale libre de ladite ou desdites conduites allongées (4), l'espace libre entre ledit manchon (29) et ladite ou lesdites conduites allongées (4) formant au moins une arrivée d'air (9) pour ladite chambre à solitons (8).

**22.** Dispositif selon la revendication 20, **caractérisé en ce que** la seconde ouverture (8") de la chambre à solitons (8) est prolongée du côté de la ou des conduites allongées (4), par un manchon (29) de section supérieure à celle de la ou des conduites allongées (4) et de longueur égale à la moitié de la longueur de la ou des conduites allongées (4), ledit manchon (29) étant positionné de manière mobile sur l'extrémité terminale libre de ladite ou desdites conduites allongées (4), l'espace libre entre ledit manchon (29) et ladite ou lesdites conduites allongées (4) formant au moins une arrivée d'air (9) pour ladite chambre à solitons (8) et la seconde ouverture (8") plus ou moins recourbée de la chambre à solitons (8) coulissant à frottement sur ledit manchon (29).

23. Dispositif selon l'une quelconque des revendications 1 à 22, **caractérisé en ce que** la chambre à solitons (8) est mobile par rapport à la chambre de résonance (1).

24. Dispositif selon la revendication 23, **caractérisé en ce que** l'organe d'aspiration pulsante (10) est mobile par rapport à la chambre à solitons (8), l'espace entre ladite chambre à solitons (8) et ledit organe d'aspiration pulsante (10) formant une partie d'un dispositif accélérateur de débit (30) à ouverture variable.

25. Dispositif selon la revendication 24, **caractérisé en ce qu'**il comporte un moyen de formation d'un mouvement d'aspiration circulaire rotatif, tangentiel orienté, générateur d'une accélération toroïdale du flux transitant par le dispositif accélérateur de débit (30).

26. Dispositif selon l'une quelconque des revendications 21 à 25, **caractérisé en ce que** la chambre de résonance (1), la chambre à solitons (8) et/ou l'organe d'aspiration pulsante (10) sont montés sur un ou plusieurs chariots (31) qui se déplacent le long d'au moins un rail (32).

27. Dispositif selon l'une quelconque des revendications 21 à 26, **caractérisé en ce que** la ou les conduites allongées (4) de la chambre de résonance (1) présentent, sur leurs pourtours extérieurs, des éléments (33) ayant une surface extérieure qui augmente en direction de la chambre de résonance (1), de manière à ce que l'espace existant entre les parois de la seconde ouverture (8") ou celles de son prolongement par le manchon (29) et la surface extérieure desdits éléments (33) diminue lorsque ladite seconde ouverture (8") ou ledit manchon (29) se rapproche desdits éléments (33) permettant ainsi de réguler le débit d'air entrant dans les arrivées d'air (9).

28. Dispositif selon la revendication 27, **caractérisé en ce que** la surface extérieure des éléments (33) est de forme complémentaire à celle de la seconde ouverture (8") plus ou moins recourbée ou à celle du manchon (29).

29. Dispositif selon les revendications 27 ou 28, **caractérisé en ce que** les éléments (33) sont montés de façon mobile sur la ou les conduites allongées (4), par exemple, par coulissement ou rotation autour d'une vis hélicoïdale.

30. Dispositif selon l'une quelconque des revendications 19 à 29, **caractérisé en ce que** la profondeur de l'emboîtement de la seconde ouverture (8"), éventuellement prolongée par le manchon (29), sur la ou les conduites allongées (4) est réglable par l'intermédiaire du déplacement de la chambre à solitons (8), du manchon (29) et/ou des éléments (33) afin de contrôler la réaction d'ionisation de la ou des matières (M), la variation de la profondeur dudit emboîtement permettant d'adapter la condition de phase de l'air entrant par les arrivées d'air (9) de sorte que ledit flux d'air soit en opposition de phase par rapport au flux de matières (M) extrait de la chambre de résonance (1).

31. Dispositif selon l'une quelconque des revendications 19 à 30, **caractérisé en ce que** l'arrivée d'air (9) par la seconde ouverture (8") de la chambre à solitons (8) est alimentée de manière étanche par au moins une conduite qui prend son origine à l'un des points nodaux du dispositif.

32. Dispositif selon l'une quelconque des revendications 1 à 31, **caractérisé en ce que** l'organe d'aspiration pulsante (10) est un conduit statique de fumées (34).

33. Dispositif selon l'une quelconque des revendications 1 à 31, **caractérisé en ce que** l'organe d'aspiration pulsante (10) est un ensemble de déflecteurs (35) d'un pulsoréacteur (36).

34. Dispositif selon l'une quelconque des revendications 1 à 31, **caractérisé en ce que** l'organe d'aspiration pulsante (10) est dispositif accélérateur de débit (30) à ouverture variable actionné par un dispositif du type ventilateur ou une turbine soufflante (37).

35. Dispositif selon l'une quelconque des revendications 1 à 31, **caractérisé en ce que** l'organe d'aspiration pulsante (10) est une turbine à gaz (38) dont le premier aubage (39), accolé à la première ouverture (8') de la chambre à solitons (8), produit une aspiration pulsante.

36. Dispositif selon l'une quelconque des revendications 1 à 31, **caractérisé en ce que** l'organe d'aspiration pulsante (10) est un statoréacteur.

**37.** Dispositif selon l'une quelconque des revendications 1 à 31, **caractérisé en ce que** l'organe d'aspiration pulsante (10) est au moins un moteur à explosion (41, 42).

**38.** Dispositif selon l'une quelconque des revendications 2 à 31 en combinaison avec la revendication 37, **caractérisé en ce que** le moyen d'assistance à l'allumage (12) de la matière (M) conditionnée dans l'espace (11) est celui du moteur à explosion (41, 42).

**39.** Dispositif selon l'une quelconque des revendications 1 à 38, **caractérisé en ce que** le ou les moyens d'alimentation (2) de la chambre de résonance (1) sont disposés en regard d'une sortie (3) de ladite chambre de résonance (1) et sur l'axe longitudinal d'une conduite allongée (4).

**40.** Procédé d'ionisation ou de transformation de la matière utilisant un dispositif selon l'une quelconque des revendications 1 à 39, avec les étapes consistant à :

- mette en marche l'organe d'aspiration pulsante (10),
- introduire la ou les matières (M) à ioniser ou à transformer dans la chambre de résonance (1),
- conditionner la ou les matières (M) dans un état vibratoire stationnaire, cohérent et semi-condensé, à l'aide du dispositif acoustique (7) et de l'organe d'aspiration pulsante (10), **caractérisé en ce qu'**

après plusieurs allées et venues dans la chambre de résonance (1) or aspire la ou les matières (M) conditionnées via la ou les conduites allongées (4) à la sortie et on entretient les réflexions entre les faces miroir,
on ajoute de l'air externe à la ou aux matières (M) conditionnées débouchant de la ou des conduites allongées (4) au moyen des arrivées d'air (9) situées à proximité de ladite ou desdites conduites allongées (4), et on laisse s'ioniser la ou les matières (M) conditionnées.

**41.** Procédé selon la revendication 40, **caractérisé en ce qu'**il comprend en, outre, une étape d'optimisation de la réaction après l'étape d'ionisation de la ou des matières (M) conditionnées en réglant l'un ou plusieurs des paramètres suivants : ouverture du dispositif acoustique (7), puissance de l'organe d'aspiration pulsante (10), débit d'air entrant par les arrivées d'air (9), position des arrivées d'air (9) par rapport au plan nodal de la ou des conduites allongées (4) ou d'un autre plan nodal du dispositif, distance séparant la seconde ouverture (8") de la ou des sorties (3) de la chambre de résonance (1), ajustage de la longueur de la ou des conduites allongées (4), ce afin d'adapter le régime de la réaction d'ionisation de la ou des matières (M) à la vitesse de conditionnement desdites matières (M) dans la chambre de résonance (1).

**42.** Procédé selon la revendication 41, **caractérisé en ce que** l'on mesure les concentrations en $SO_2$, en $C_xH_y$, en $NO_x$ ou en $O_2$, de l'air rejeté par le dispositif selon l'une quelconque des revendications 1 à 39, afin de déterminer le réglage de l'un ou plusieurs des paramètres suivants : puissance le l'organe d'aspiration pulsante (10), position des arrivées d'air (9) par rapport au plan nodal de la ou des conduites allongées (4) ou d'un autre plan nodal du dispositif, débit d'air entrant par les arrivées d'air (9), distance séparant la première ouverture (8') de la ou des sorties (3) de la chambre de résonance (1), ajustage de la longueur de la ou des conduites (4), réglage du dispositif acoustique (7) ce afin d'optimiser la réaction d'ionisation de la ou des matières (M) jusqu'à obtenir une concentration en $O_2$ dans le flux des effluents qui soit au moins équivalente à la concentration atmosphérique et des concentrations en $SO_2$, en $C_xH_y$ et/ou en $NO_x$ nulles ou pratiquement nulles.

**43.** Procédé selon l'une quelconque des revendications 40 à 42, **caractérisé en ce que** l'on prévoit on moyen d'assistance à l'allumage (12) mis en marche avec l'organe d'aspiration pulsante (10) et que l'on éteint le moyen d'assistance à l'allumage (12) Lorsque la réaction d'ionisation de la ou des matières (M) se poursuit de manière autonome.

**44.** Procédé selon l'une quelconque des revendications 40 à 43, **caractérisé en ce que** l'on stocke l'énergie libérée par la ou les matières (M) dissociées et conditionnées avant leur ionisation sous la forme d'une ou plusieurs matières nobles par condensation avant l'ionisation de la ou des matière(s) créée(s) dans le ou les moyens de collecte (24) des condensats.

**45.** Utilisation du procédé selon l'une quelconque des revendications 40 à 43 pour la production d'énergie thermique.

**46.** Utilisation du procédé selon l'une quelconque des revendications 40 à 43 pour la production d'énergie chimique.

**47.** Utilisation du procédé selon l'une quelconque des revendications 40 à 43 pour la production d'énergie mécanique.

**48.** Incinérateur, en particulier de déchets, mettant en oeuvre le dispositif selon l'une quelconque des revendications 1 à 39.

**49.** Monteur thermique écologique, notamment pour véhicules, mettant en oeuvre le dispositif selon l'une quelconque des revendications 2 à 30 et 37 à 39.

**50.** Turbine mettant en oeuvre le dispositif selon l'une quelconque des revendications 1 à 30 et 33.

**51.** Statoréacteur mettant en oeuvre le dispositif selon l'une quelconque des revendications 1 à 29 et 36.

**52.** Foyers et chaudières domestiques mettant en oeuvre le dispositif selon l'une quelconque des revendications 1 à 32.

**Claims**

**1.** Device for producing a plasma by a reaction involving the combustion of a substance or a mixture of substances M, which is provided with

- a resonance chamber (1) of the "Fabry-Perot" cavity type for creating the steady circulation of a stream of said substance or substances (M) with at least one supply means (2) at least one outlet (3) in the form of elongated pipe(s) (4), **characterised in that** it also comprises
- an acoustic chamber (5) communicating with said resonance chamber (1) via an orifice (6) and provided with an acoustic device (7) for generating modulated harmonics, and
- a soliton chamber (8) with an adjustable volume for receiving the conditioned substance in a steady, coherent and semi-condensed vibrational state issuing via the elongated pipe or pipes (4) of the resonance chamber (1) at the same time as it generates recirculation of external air toward this resonance chamber (1) via said elongated pipe or pipes (4), said soliton chamber (8) being equipped with at least one adjustable flow rate air inlet (9) and said soliton chamber (8) defining, with a pulsating suction member (10) adjacent to the outlet of said soliton chamber (8), a space (11) for the production of ionised substance.

**2.** Device according to claim 1, **characterised in that** it also comprises at least one ignition aid (12) for the substance or substances (M) conditioned in the space (11) of the soliton chamber (8).

**3.** Device according to claim 1 or 2, **characterised in that** the means (2) for supplying the resonance chamber (1) with substance(s) (M) consist of at least one supply opening (13) produced in said resonance chamber (1).

**4.** Device according to claim 3, **characterised in that** the supply opening or openings (13) are topped by at least one hopper (14) which may be equipped with an upper closure door (15) and a lower closure door (16) and/or a lower grid (17).

**5.** Device according to claim 4, **characterised in that** the hopper or hoppers (14) may be displaced above the supply openings (13) of the resonance chamber (1) from one supply opening (13) to another supply opening (13).

**6.** Device according to any one of claims 1 to 5, **characterised in that** at least one device (18) is provided for stirring the solid substance or substances (M) introduced into said resonance chamber (1).

**7.** Device according to claim 1 or 2, **characterised in that** the supply means (2) consist of one or more injectors and/or nebulisers (19, 20) for the substance or substances (M) which may possibly be treated beforehand in order to obtain a presentation appropriate for said injectors and/or nebulisers (19, 20).

**8.** Device according to claim 4, 5 or 7, **characterised in that** the hopper or hoppers (14) or the injector(s) and/or nebuliser(s) (19, 20) comprise means (22) for heating the substance or substances (M) supplying the resonance chamber (1).

**9.** Device according to any one of claims 1 to 8, **characterised in that** the resonance chamber (1) and/or the acoustic chamber (5) and/or the soliton chamber (8) and/or the elongated pipes (4) are also provided with one or more collecting means (24) and/or discharge means (25, 25') for overflow rates, residues and/or combustion condensates produced, wherein said collecting means (24) and/or discharge means (25, 25') may be provided with vents (23), thermal protection and/or cooling and/or confinement means.

10. Device according to claim 9, **characterised in that** the collecting means (24) are disposed below and in the vicinity of the orifice (6) of the acoustic chamber (5).

11. Device according to any one of claims 1 to 10, **characterised in that** the size and shape of the acoustic chamber (5) depend on the distance between said orifice (6) and said acoustic device (7), this distance itself being coordinated with the distance between the outlet or outlets (3) of said resonance chamber (1) and said acoustic device (7).

12. Device according to claim 11, **characterised in that** the distance between said orifice (6) and said acoustic device (7) is a complete submultiple of the distance between the outlet or outlets (3) of said resonance chamber (1) and said acoustic device (7).

13. Device according to claim 11 or 12, **characterised in that** the orifice (6), the acoustic device (7) and an outlet (3) of the resonance chamber (1) are aligned.

14. Device according to any one of claims 1 to 13, **characterised in that** the acoustic device (7) is an acoustic muff or an acoustic reed.

15. Device according to any one of claims 1 to 14, **characterised in that** the elongated pipe or pipes (4) have adjustable lengths, for example by being produced in the form of telescopic portions.

16. Device according to any one of claims 1 to 15, **characterised in that** the section of the elongated pipe or pipes (4) is smaller than that of the resonance chamber (1) and greater than that of a first opening (8') of the soliton chamber (8) connected to the pulsating suction member (10) in such a way that the stream of substances (M), which tends to have the section of said first opening (8'), leaves at least one annular space for introduction into the elongated pipe or pipes (4) of the reflected wave consisting of the air which is introduced into the soliton chamber (8) via at least one air inlet (9) and said air rises in said elongated pipe or pipes (4) in the direction of the resonance chamber (1).

17. Device according to claim 16, **characterised in that** at least one recirculation guide (26) having a section smaller than that of the elongated pipe or pipes (4) is provided at least in part inside said elongated pipe or pipes (4), for example in the form of an elongated sleeve opening into the resonance chamber (1).

18. Device according to any one of claims 1 to 17, **characterised in that** the natural frequency of the elongated pipe or pipes (4) is selected so as to reverberate at the fundamental frequency of the wave circulating in the resonance chamber (1) and so that the reflected wave directed from the outlet of the elongated pipe or pipes (4) toward the resonance chamber (1) makes up a common mode with the incident wave to promote the beat.

19. Device according to any one of claims 1 to 18, **characterised in that** the soliton chamber (8) has a cylindrical or quasi-cylindrical shape (27) comprising a first opening (8') for connection to the pulsating suction member (10) and a second opening (8") fitting on the elongated pipe or pipes (4) of the resonance chamber (1) so that the space remaining between said second opening (8") and said elongated pipe or pipes (4) forms at least one air inlet (9) for said soliton chamber (8).

20. Device according to any one of claims 1 to 18, **characterised in that** the soliton chamber (8) has substantially the shape of a flared bell (28) comprising, on the one hand, a first opening (8') on the enlargement side for connection to the pulsating suction member (10) and, on the other hand, a more or less curved second opening (8") fitting on the elongated pipe or pipes (4) of the resonance chamber (1) so that the space remaining between said second opening (8") and said elongated pipe or pipes (4) forms at least one air inlet (9) for said soliton chamber (8).

21. Device according to claim 20, **characterised in that** the second opening (8") of the soliton chamber (8) is extended on the side with the elongated pipe or pipes (4) by a sleeve (29) having a section greater than that of the elongated pipe or pipes (4) and a length equal to half the length of the elongated pipe or pipes (4), said sleeve (29) being positioned stationarily on the free terminal end of said elongated pipe or pipes (4), the free space between said sleeve (29) and said elongated pipe or pipes (4) forming at least one air inlet (9) for said soliton chamber (8).

22. Device according to claim 20, **characterised in that** the second opening (8") of the soliton chamber (8) is extended on the side with the elongated pipe or pipes (4) by a sleeve (29) having a section greater than that of the elongated pipe or pipes (4) and a length equal to half the length of the elongated pipe or pipes (4), said sleeve (29) being positioned movably on the free terminal end of said elongated pipe or pipes (4), the free space between said sleeve (29) and said elongated pipe or pipes (4) forming at least one air inlet (9) for said soliton chamber (8) and the second more or less curved opening (8") of the soliton chamber (8) sliding with friction on said sleeve (29).

23. Device according to any one of claims 1 to 22, **characterised in that** the soliton chamber (8) is movable relative to the resonance chamber (1).

24. Device according to claim 23, **characterised in that** the pulsating suction member (10) is movable relative to the soliton chamber (8), the space between said soliton chamber (8) and said pulsating suction member (10) forming a part of a variable-port flow rate accelerator (30).

25. Device according to claim 24, **characterised in that** it comprises a means for forming an orientated tangential rotational circular suction movement which generates toroidal acceleration of the flux passing through the flow rate accelerator (30).

26. Device according to any one of claims 21 to 25, **characterised in that** the resonance chamber (1), the soliton chamber (8) and/or the pulsating suction member (10) are mounted on one or more carriages (31) which travel along at least one rail (32).

27. Device according to any one of claims 21 to 26, **characterised in that** the elongated pipe or pipes (4) of the resonance chamber (1) have, on their external peripheries, elements (33) having an external surface which increases in the direction of the resonance chamber (1) so that the space between the walls of the second opening (8") or those of its extension by the sleeve (29) and the external surface of said elements (33) decreases when said second opening (8") or said sleeve (29) approaches said elements (33), thus allowing the regulation of the air flow rate entering the air inlets (9).

28. Device according to claim 27, **characterised in that** the external surface of the elements (33) has a shape mating with that of the second more or less curved opening (8") or that of the sleeve (29).

29. Device according to claims 27 or 28, **characterised in that** the elements (33) are mounted movably on the elongated pipe or pipes (4), for example by sliding or rotation round a helical screw.

30. Device according to any one of claims 19 to 29, **characterised in that** the depth of nesting of the second opening (8"), optionally extended by the sleeve (29), on the elongated pipe or pipes (4) may be adjusted via the displacement of the soliton chamber (8), the sleeve (29) and/or the elements (33) in order to check the ionisationon reaction or the substance or substances (M), the variation in the depth of said nesting allowing the phase state of the air entering via the air inlets (9) to be adapted so that said air stream is in phase opposition to the stream of substances (M) extracted from the resonance chamber (1).

31. Device according to any one of claims 19 to 30, **characterised in that** the air inlet (9) via the second opening (8") of the soliton chamber (8) is supplied in a tight manner by at least one pipe which originates at one of the nodal points of the device.

32. Device according to any one of claims 1 to 31, **characterised in that** the pulsating suction member (10) is a static smoke duct (34).

33. Device according to any one of claims 1 to 31, **characterised in that** the pulsating suction member (10) is a set of deflectors (35) of a pulse-jet (36).

34. Device according to any one of claims 1 to 31, **characterised in that** the pulsating suction member (10) is a variable port flow rate accelerator (30) actuated by a fan-type device or blowing turbine (37).

35. Device according to any one of claims 1 to 31, **characterised in that** the pulsating suction member (10) is a gas turbine (38) of which the first blade (39), attached to the first opening (8') of the soliton chamber (8), produces a pulsating suction.

**36.** Device according to any one of claims 1 to 31, **characterised in that** the pulsating suction member (10) is a ram-jet.

**37.** Device according to any one of claims 1 to 31, **characterised in that** the pulsating suction member (10) is an internal-combustion engine (41, 42).

**38.** Device according to any one of claims 2 to 31 in combination with claim 37, **characterised in that** the ignition aid (12) for the substance (M) conditioned in the space (11) is that of the internal-combustion engine (41, 42).

**39.** Device according to any one of claims 1 to 38, **characterised in that** the supply means (2) for the resonance chamber (1) are disposed opposite an outlet of said resonance chamber (1) and on the longitudinal axis of an elongated pipe (4).

**40.** Process for the ionisation or transformation of the substance employing a device according to any of claims 1 to 39, with the stages consisting of:

- starting up the pulsating suction member (10),
- introducing the substance or substances (M) to be ionised or to be transformed in the resonance chamber (1),
- conditioning the substance or substances (M) in a coherent and semi-condensed steady vibratory state using the acoustic device (7) and the pulsating suction member (10), **characterised in that** after to-ing and fro-ing several times in the resonance chamber (1), the conditioned substance or substances (M) are aspirated via the elongated pipe or pipes (4) at the outlet and the reflections between the mirror faces are maintained,

external air is added to the conditioned substance or substances (M) issuing from the elongated pipe or pipes (4) via the air inlets (9) situated in the vicinity of the said elongated pipe or pipes (6), and the conditioned substance or substances (M) are ionised.

**41.** Process according to claim 40, **characterised in that** it also comprises a stage of optimisation of the reaction after the stage of ionisation of the conditioned substance or substances (M) by adjusting one or more of the following parameters: opening the acoustic device (7), power of the pulsating suction member (10), flow rate of air entering via the air inlets (9), position of the air inlets (9) relative to the nodal plane of the elongated pipe or pipes (4) or of another nodal plane of the device, distance separating the second opening (8") from the outlet or outlets (3) of the resonance chamber (1), adjusting the length of the elongated pipe or pipes (4), in order to adapt the rate of the ionisation reaction of the substance or substances (M) to the conditioning rate of said substances (M) in the resonance chamber (1).

**42.** Process according to claim 41, **characterised in that** the concentrations of $SO_2$, $C_xH_y$, $NO_x$ or $O_2$ of the air rejected by the device according to any of claims 1 to 39 are measured in order to determine the adjustment of one or more of the following parameters: power of the pulsating suction member (10), position of the air inlets (9) relative to the nodal plane of the elongated pipe or pipes (4) or of another nodal plane of the device, flow rate of air entering via the air inlets (9), distance separating the first opening (8') from the outlet or outlets (3) of the resonance chamber (1), adjustment of the length of the pipe or pipes (4), adjustment of the acoustic device (7) in order to optimise the ionisation reaction of the substance or substances (M) until there is an $O_2$ concentration in the flow of effluents which is at least equivalent to the atmospheric concentration and concentrations of $SO_2$, $C_xH_y$ and/or $NO_x$ which are zero or virtually zero.

**43.** Process according to any one of claims 40 to 42, **characterised in that** an ignition aid (12) switched on with the pulsating suction device (10) is provided and the ignition aid (12) is extinguished when the ionisation reaction of the substance or substances (M) continues autonomously.

**44.** Process according to any one of claims 40 to 43, **characterised in that** the energy released by the dissociated and conditioned substance or substances (M) is stored prior to the ionisation thereof in the form of one or more noble substances by condensation prior to ionisation of the substance(s) created in the condensate collecting means (24).

**45.** Use of the process according to any one of claims 40 to 43 for the production of thermal energy.

**46.** Use of the process according to any one of claims 40 to 43 for the production of chemical energy.

**47.** Use of the process according to any one of claims 40 to 43 for the production of mechanical energy.

**48.** Incinerator, in particular for waste, employing the device according to any one of claims 1 to 39.

**49.** Ecological heat engine, in particular for vehicles employing the device according to any one of claims 2 to 30 and 37 to 39.

**50.** Turbine employing the device according to any one of claims 1 to 30 and 33.

**51.** Ramjet employing the device according to any one of claims 1 to 29 and 36.

**52.** Domestic hearths and boilers employing the device according to any of claims 1 to 32

**Patentansprüche**

**1.** Vorrichtung zur Erzeugung eines Plasmas durch eine Verbrennungsreaktion eines Stoffes oder Stoffgemisches M, ausgestattet mit einer Resonanzkammer (1) vom Typ "Fabry-Perot"-Hohlraum, dazu bestimmt, eine stationäre Zirkulationsströmung des genannten Stoffes oder Stoffgemisches (M) zu erzeugen, mit mindestens einem Einspeisungsmittel (2) und mindestens einem Ausgang (3) in Form einer/von lang gestreckten Leitung/en (4), **dadurch gekennzeichnet, dass** sie außerdem umfasst:

- eine Akustikkammer (5), die mit der genannten Resonanzkammer (1) über eine Öffnung (6) in Verbindung steht und mit einer akustischen Vorrichtung (7) versehen ist, die ein modulierbarer Obertongenerator ist, und
- eine Solitonenkammer (B) einstellbaren Volumens, die dazu bestimmt ist, den konditionierten, das heißt in einem Zustand stationärer, kohärenter und halbkondensierter Schwingung befindlichen Stoff zu empfangen, der durch die lang gestreckte(n) Leitung(en) (4) aus der Resonanzkammer (1) austritt, während sie gleichzeitig durch die lang gestreckte(n) Leitung(en) (4) einen Rückfluss von Außenluft zu dieser Resonanzkammer (1) bewirkt, wobei die genannte Solitonenkammer (8) mit mindestens einem Lufteinlass (9) regelbarer Durchflussmenge versehen ist und wobei die genannte Solitonenkammer (8) zusammen mit einem pulsierenden Saugorgan (10), das sich anschließt, an den Ausgang der genannten Solitonenkammer (8) einen Raum (11) zur Erzeugung ionisierter Materie definiert.

**2.** Vorrichtung nach Patentanspruch 1, **dadurch gekennzeichnet, dass** sie außerdem mindestens ein Mittel zur Unterstützung der Zündung (12) des oder der Stoffe(s) (M) aufweist, die im Raum (11) der Solitonenkammer (8) konditioniert sind.

**3.** Vorrichtung nach Patentanspruch 1 oder 2, **dadurch gekennzeichnet, dass** das oder die Einspeisungsmittel (2) für Stoff(e) (M) in die Resonanzkammer (1) aus mindestens einer Einspeiseöffnung (13) bestehen, die in der genannten Resonanzkammer (1) ausgebildet ist.

**4.** Vorrichtung nach Patentanspruch 3, **dadurch gekennzeichnet, dass** die Einspeiseöffnungen (13) mit mindestens einem Trichter (14) versehen sind, der mit einer oberen Verschlusstür (15) versehen sein kann und mit einer unteren Verschlusstür (16) und/oder einem unteren Gitter (17).

**5.** Vorrichtung nach Patentanspruch 4, **dadurch gekennzeichnet, dass** der oder die Trichter (14) oberhalb von den Einspeiseöffnungen (13) der Resonanzkammer (1) von einer Einspeiseöffnung (13) zu einer anderen Einspeiseöffnung (13) versetzt werden können.

**6.** Vorrichtung nach einem der Patentansprüche 1 bis 5, **dadurch gekennzeichnet, dass** mindestens eine Vorrichtung (18) zur Durchmischung des oder der festen Stoffe(s) (M) vorgesehen ist, der/die in die genannte Resonanzkammer (1) eingebracht werden.

**7.** Vorrichtung nach Patentanspruch 1 oder 2, **dadurch gekennzeichnet, dass** das oder die Einspeisungsmittel (2) aus einer oder mehreren Einspritz- und/oder Vernebelungsvorrichtungen (19, 20) für den oder die Stoff(e) (M) bestehen, die eventuell vorbehandelt werden können, um in für die Einspritz- und/oder Vernebelungsvorrichtungen (19, 20) geeigneter Form vorzuliegen.

**8.** Vorrichtung nach Patentanspruch 4, 5 oder 7, **dadurch gekennzeichnet, dass** der oder die Trichter (14) oder die Einspritz- und/oder Vernabelungsvorrichtung(en) (19, 20) Heizmittel (22) für den oder die Stoff(e) (M) aufweisen, die zur Einspeisung in die Resonanzkammer (1) vorgesehen sind.

9. Vorrichtung nach einem der Patentansprüche 1 bis 8, **dadurch gekennzeichnet, dass** die Resonanzkammer (1) und/oder die Akustikkammer (5) und/oder die Solitonenkammer (8) und/ oder die lang gestreckte(n) Leitung(en) (4) außerdem mit einem oder mehreren Mitteln zum Sammeln (24) und/oder Evakuieren (25, 25') von Überständen, Rückständen und/oder erzeugten Verbrennungskondensaten versehen sind, wobei die genannten Sammel- (24) und/oder Evakuierungsmittel (25, 25') mit Lüftungsöffnungen (23) versehen sein können, mit Wärmedämm- und/ oder Kühl- und/oder Heiz- und/oder Einschlussmitte!n.

10. Vorrichtung nach Patentanspruch 9, **dadurch gekennzeichnet, dass** das oder die Sammelmittel (24) unterhalb und nahe der Öffnung (6) der Akustikkammer (5) angeordnet sind.

11. Vorrichtung nach einem der Patentansprüche 1 bis 10, **dadurch gekennzeichnet, dass** die Abmessungen und die Form der Akustikkammer (5) vom Abstand zwischen der genannten Öffnung (6) und der genannten akustischen Vorrichtung (7) abhängig sind, wobei dieser Abstand selbst mit dem Abstand zwischen dem Ausgang oder den Ausgängen (3) der genannten Resonanzkammer (1) und der genannten akustischen Vorrichtung (7) abgestimmt ist.

12. Vorrichtung nach Patentanspruch 11, **dadurch gekennzeichnet, dass** der Abstand zwischen der genannten Öffnung (6) und der genannten akustischen Vorrichtung (7) ein ganzzahliger Teiler des Abstandes zwischen dem Ausgang oder den Ausgängen (3) der genannten Resonanzkammer (1) und der genannten akustischen Vorrichtung (7) ist.

13. Vorrichtung nach Patentanspruch 11 oder 12, **dadurch gekennzeichnet, dass** die Öffnung (6), die akustische Vorrichtung (7) und ein Ausgang (3) der Resonanzkammer (1) aneinandergereiht sind.

14. Vorrichtung nach einem der Patentansprüche 1 bis 13, **dadurch gekennzeichnet, dass** die akustische Vorrichtung (7) ein akustisches Düse oder eine akustische Zunge Ist.

15. Vorrichtung nach einem der Patentansprüche 1 bis 14, **dadurch gekennzeichnet, dass** die lang gestreckte(n) Leitung(en) (4) einstellbare Länge haben, indem sie beispielsweise als teleskopierbare Abschnitte ausgebildet sind.

16. Vorrichtung nach einem der Patentansprüche 1 bis 15, **dadurch gekennzeichnet, dass** der Querschnitt der lang gestreckten Leitung(en) (4) geringer ist, als der der Resonanzkammer (1), und größer, als der einer ersten Öffnung (8') der Solitonenkammer (8), die mit dem pulsierenden Saugorgan (10) verbunden ist, derart, dass der Strom der Stoffe (M), der bestrebt ist, den Querschnitt der genannten ersten Öffnung (8') anzunehmen, mindestens einen ringförmigen Raum für die Einleitung der reflektierten Welle in die lang gestreckte(n) Leitung(en) (4) offen lässt, die in der Luft besteht, die durch mindestens einen Lufteinlass (9) in die Solitonenkammer (8) eintritt, wobei die genannte Luft in der/den lang gestreckten Leitung(en) (4) in Richtung der Resonanzkammer (1) aufsteigt.

17. Vorrichtung nach Patentanspruch 16, **dadurch gekennzeichnet, dass** mindestens eine Rückflussführung (26) geringeren Querschnitts, als dessen der lang gestreckten Leitung(en) (4) mindestens teilweise im Inneren der genannten lang gestreckten Leitung(en) (4) vorgesehen ist, beispielsweise in Form einer lang gestreckten Hülse, die in der Resonanzkammer (1) mündet.

18. Vorrichtung nach einem der Patentansprüche 1 bis 17, **dadurch gekennzeichnet, dass** die Eigenfrequenz der lang gestreckten Leitung(en) (4) derart gewählt ist, dass sie mit der Grundfrequenz der Welle in Resonanz ist, die in der Resonanzkammer (1) zirkuliert, und derart, dass die reflektierte Welle, die vom Ausgang der lang gestreckten Leitung(en) (4) zur Resonanzkammer (1) gerichtet ist, einen gemeinsamen Modus mit der einfallenden Welle bildet, um die Schmelzung zu fördern.

19. Vorrichtung nach einem der Patentansprüche 1 bis 18, **dadurch gekennzeichnet, dass** die Solitonenkammer (8) zylindrische oder quasizylindrische Form (27) hat und eine erste Offnung (8') für den Anschluss an das Organ zum pulsierenden Absaugen (10) aufweist, und eine zweite Öffnung (8"), die die lang gestreckte(n) Leitung(en) (4) der Resonanzkammer (1) umfängt, derart, dass der verbleibende Raum zwischen der genannten zweiten Öffnung (8") und der oder den genannten lang gestreckten Leitung(en) (4) mindestens einen Lufteinlass (9) für die genannte Solitonenkammer (8) bildet.

20. Vorrichtung nach einem der Patentansprüche 1 bis 18, **dadurch gekennzeichnet, dass** die Solitonenkammer (8) im Wesentlichen die Form einer konisch erweiterten Glocke (28) aufweist, die einerseits eine erste Öffnung (8') auf der Seite der Verdickung trägt, die zum Anschluss an das Organ zum pulsierenden Absaugen (10) dient, und andererseits eine zweite mehr oder weniger umgebogene Öffnung (8"), die die lang gestreckte(n) Leitung(en) (4) der Resonanzkammer (1) umfängt, derart, dass der verbleibende Raum zwischen der genannten zweiten Öffnung (8") und der oder den genannten lang gestreckten Leitung(en) (4) mindestens einen Lufteinlass (9) für die genannte Solitonenkammer (8) bildet.

21. Vorrichtung nach Patentanspruch 20, **dadurch gekennzeichnet, dass** die zweite Öffnung (8") der Solitonenkammer (8) auf der Seite der lang gestreckten Leitung(en) (4) durch eine Hülse (29) größeren Querschnitts, als dessen der lang gestreckten Leitung(en) (4) und gleicher Länge, wie der Hälfte der Länge der lang gestreckten Leitung(en) (4), fortgesetzt wird, wobei die genannte Hülse (29) am freien Ende der genannten lang gestreckten Leitung(en) (4) fest angebracht ist, wobei der Freiraum zwischen der genannten Hülse (29) und der/den genannten lang gestreckten Leitung(en) (4) mindestens einen Lufteinlass (9) für die genannte Solitonenkammer (8) bildet.

22. Vorrichtung nach Patentanspruch 20, **dadurch gekennzeichnet, dass** die zweite Öffnung (8") der Solitonenkammer (8) auf der Seite der lang gestreckten Leitung(en) (4) durch eine Hülse (29) größeren Querschnitts, als dessen der lang gestreckten Leitung(en) (4) und gleicher Länge, wie der Hälfte der Länge der lang gestreckten Leitung(en) (4), fortgesetzt wird, wobei die genannte Hülse (29) am freien Ende der genannten lang gestreckten Leitung(en) (4) beweglich angebracht ist und der Freiraum zwischen der genannten Hülse (29) und der/den genannten lang gestreckten Leitung(en) (4) mindestens einen Lufteinlass (9) für die genannte Solitonenkammer (8) bildet und die zweite, mehr oder weniger umgebogene Öffnung (8") der Solitonenkammer (8) auf der genannten Hülse (29) reibend gleitet.

23. Vorrichtung nach einem der Patentansprüche 1 bis 22, **dadurch gekennzeichnet, dass** die Solitonenkammer (8) relativ zur Resonanzkammer (1) beweglich ist.

24. Vorrichtung nach Patentanspruch 23, dadurch (10) relativ zur Solitonenkammer (8) beweglich ist, wobei der Raum zwischen der genannten Solitonenkammer (8) und dem genannten Organ zum pulsierenden Absaugen (10) Teil einer Vorrichtung zur Durchflussbeschleunigung (30) mit veränderbarer Öffnung ist.

25. Vorrichtung nach Patentanspruch 24, **dadurch gekennzeichnet, dass** sie ein Mittel zur Erzeugung einer rotierend kreisförmigen, tangential orientierten Absaugbewegung aufweist, die eine toroidische Beschleunigung der Strömung erzeugt, die die Vorrichtung zur Durchflussbeschleunigung (30) durchläuft.

26. Vorrichtung nach einem der Patentansprüche 21 bis 25, **dadurch gekennzeichnet, dass** die Resonanzkammer (1), die Solitonenkammer (8) und/oder das Organ zum pulsierenden Absaugen (10) auf einem oder mehreren Wagen (31) angebracht sind, die sich längs mindestens einer Schiene (32) bewegen.

27. Vorrichtung nach einem der Patentansprüche 21 bis 26, **dadurch gekennzeichnet, dass** die lang gestreckte(n) Leitung(en) (4) der Resonanzkammer (1) auf ihrem Außenumfang Teile (33) aufweisen, die eine Außenfläche haben, die sich in Richtung der Resonanzkammer (1) vergrößert, derart, dass der Raum zwischen den Wandungen der zweiten Öffnung (8") oder denen ihrer Fortsetzung in der Hülse (29) und der Außenfläche der genannten Teile (33) sich verringert, wenn sich die genannte zweite Öffnung (8") oder die genannte Hülse (29) den genannten Teilen (33) nähert, was erlaubt, die Durchflussmenge der Luft zu regulieren, die in die Lufteinlässe (9) eintritt.

28. Vorrichtung nach Patentanspruch 27, **dadurch gekennzeichnet, dass** die Form der Außenfläche der Teile (33) zu der mehr oder weniger umgebogenen der zweiten Öffnung (8") komplementär ist oder zu der der Hülse (29).

29. Vorrichtung nach den Patentansprüchen 27 oder 28, **dadurch gekennzeichnet, dass** die Teile (33) auf der/den lang gestreckten Leitung(en) (4) beispielsweise durch Gleiten oder Drehen um eine spiralförmige Schraube beweglich montiert sind.

30. Vorrichtung nach einem der Patentansprüche 19 bis 29, **dadurch gekennzeichnet, dass** die Aufschiebtiefe der zweiten Öffnung (8"), gegebenenfalls durch die Hülse (29) verlängert, auf der/den lang gestreckten Leitung(en) (4) mit Hilfe einer Verschiebung der Solitonenkammer (8), der Hülse (29) und/oder der Teile (33) einstellbar ist, um die lonisationsreaktion des oder der Stoffe(s) (M) zu regeln, wobei die Änderung der genannten Aufschiebtiefe es erlaubt, den Phasenzustand der durch die Lufteinlässe (9) eintretenden Luft derart anzupassen, sodass die genannte Luftströmung gegenüber der Strömung der Stoffe (M), die der Resonanzkammer (1) entnommen wird, entgegengesetzte Phase hat.

**31.** Vorrichtung nach einem der Patentansprüche 19 bis 30, **dadurch gekennzeichnet, dass** der Lufteintritt (9) durch die zweite Öffnung (8") der Solitonenkammer (8) in abgedichteter Weise durch mindestens eine Leitung gespeist wird, die an einem der Knotenpunkte der Vorrichtung beginnt.

**32.** Vorrichtung nach einem der Patentansprüche 1 bis 31, **dadurch gekennzeichnet, dass** das Organ zum pulsierenden Absaugen (10) ein statisches Rauchrohr (34) ist.

**33.** Vorrichtung nach einem der Patentansprüche 1 bis 31, **dadurch gekennzeichnet, dass** das Organ zum pulsierenden Absaugen (10) eine Anordnung von Ablenkern (35) eines Verpuffungsstrahlrohres (36) ist.

**34.** Vorrichtung nach einem der Patentansprüche 1 bis 31, **dadurch gekennzeichnet, dass** das Organ zum pulsierenden Absaugen (10) eine Vorrichtung zur Durchflussbeschleunigung (30) mit veränderbarer Öffnung ist, die durch eine Vorrichtung vom Typ eines Ventilators oder durch eine Gebläseturbine (37) betätigt wird.

**35.** Vorrichtung nach einem der Patentansprüche 1 bis 31, **dadurch gekennzeichnet, dass** das Organ zum pulsierenden Absaugen (10) eine Gasturbine (38) ist, deren erste Schaufeln (39), an die erste Öffnung (8') der Solitonenkammer (8) angebaut, ein pulsierendes Ansaugen bewirkt.

**36.** Vorrichtung nach einem der Patentansprüche 1 bis 31, **dadurch gekennzeichnet, dass** das Organ zum pulsierenden Absaugen (10) ein Staustrahltriebwerk ist.

**37.** Vorrichtung nach einem der Patentansprüche 1 bis 31, **dadurch gekennzeichnet, dass** das Organ zum pulsierenden Absaugen (10) mindestens ein Verbrennungsmotor (41, 42) ist.

**38.** Vorrichtung nach einem der Patentansprüche 2 bis 31 in Verbindung mit dem Patentanspruch 37, **dadurch gekennzeichnet, dass** das Mittel zur Unterstützung der Zündung (12) des im Raum (11) konditionierten Stoffes (M) das des Verbrennungsmotors (41, 42) ist.

**39.** Vorrichtung nach einem der Patentansprüche 1 bis 38, **dadurch gekennzeichnet, dass** das oder die Einspeisungsmittel (2) der Resonanzkammer (1) einem Ausgang (3) der genannten Resonanzkammer (1) gegenüber und auf der Längsachse einer lang gestreckten Leitung (4) angeordnet ist oder sind.

**40.** Verfahren zur Ionisierung oder Stoffumsetzung unter Verwendung einer Vorrichtung nach einem der Patentansprüche 1 bis 39 mit den Schritten:

- Einschalten des Organs zum pulsierenden Absaugen (10),
- Einbringen des oder der zu ionisierenden oder umzusetzenden Stoffe(s) (M) in die Resonanzkammer (1),
- Konditionieren des oder der Stoffe(s) (M) in einem Zustand stationärer, kohärenter und halbkondensierter Schwingung mit Hilfe der akustischen Vorrichtung (7) und des Organs zum pulsierenden Absaugen (10), **dadurch gekennzeichnet, dass** der oder die konditionierten Stoff(e) (M) nach mehreren Hin- und Herlaufen in der Resonanzkammer (1) über die lang gestreckte(n) Leitung(en) (4) an ihrem Ausgang abgesaugt werden und die Reflexionen zwischen den Spiegelflächen unterhalten werden,

dass dem oder den konditionierten Stoff(en) (M), die aus der oder den lang gestreckte(n) Leitung(en) (4) austreten, mit Hilfe der Lufteinlassmittel (9) Außenluft die sich nahe der oder den lang gestreckte(n) Leitung(en) (4) befindet zugesetzt wird, und dass die Ionisierung des oder der konditionierten Stoffes/e (M) stattfinden gelassen wird.

**41.** Verfahren nach Patentanspruch 40, **dadurch gekennzeichnet, dass** es außerdem nach dem Schritt der Ionisierung des oder der konditionierten Stoffe(s) (M) einen Schritt zur Optimierung der Reaktion durch Einstellung eines oder mehrerer der folgenden Parameter umfasst: Öffnung der akustischen Vorrichtung (7), Leistung des Organs zum pulsierenden Absaugen (10), Durchflussmenge der Luft, die durch die Lufteinlässe (9) einströmt, Position der Lufteinlässe (9) relativ zur Knotenebene der lang gestreckten Leitung(en) (4) oder zu einer anderen Knotenebene der Vorrichtung, Abstand zwischen der zweiten Öffnung (8") und dem Ausgang oder den Ausgängen (3) der Resonanzkammer (1), Anpassung der Länge der lang gestreckten Leitung(en) (4), um den Arbeitsbereich der Ionisierungsreaktion des oder der Stoffe(s) (M) der Konditionierungsgeschwindigkeit der genannten Stoffe (M) in der Resonanzkammer (1) anzupassen.

**42.** Verfahren nach Patentanspruch 41, **dadurch gekennzeichnet, dass** die Konzentrationen von $SO_2$, $C_xH_y$, $NO_x$ oder $O_2$ in der Luft gemessen werden, die von der Vorrichtung nach einem der Patentansprüche 1 bis 39 ausgestoßen wird, um die Einstellung eines oder mehrerer der folgenden Parameter festzulegen: Leistung des Organs zum pulsierenden Absaugen (10), Position der Lufteinlässe (9) relativ zur Knotenebene der lang gestreckten Leitung(en) (4) oder zu einer anderen Knotenebene der Vorrichtung, Durchflussmenge der Luft, die durch die Lufteinlässe (9) einströmt, Abstand zwischen der ersten Öffnung (8') und dem Ausgang oder den Ausgängen (3) der Resonanzkammer (1), Anpassung der Länge der lang gestreckten Leitung(en) (4), Einstellung der akustischen Vorrichtung (7), um den Arbeitsbereich der Ionisierungsreaktion des oder der Stoffe(s) (M) zu optimieren, bis eine $O_2$-Konzen-tration im Abgasstrom erreicht wird, die mindestens der Konzentration in der Atmosphäre gleich ist, und Konzen-trationen von $SO_2$, $C_xH_y$ und/oder $NO_x$ gleich Null oder praktisch gleich Null.

**43.** Verfahren nach einem der Patentansprüche 40 bis 42, **dadurch gekennzeichnet, dass** ein Mittel zur Unterstützung der Zündung (12) vorgesehen wird, das mit dem Organ zum pulsierenden Absaugen (10) eingeschaltet wird, und dass das Mittel zur Unterstützung der Zündung (12) abgeschaltet wird, wenn sich die Ionisierungsreaktion des oder der Stoffe(s) (M) autonom fortsetzt.

**44.** Verfahren nach einem der Patentansprüche 40 bis 43, **dadurch gekennzeichnet, dass** die von dem oder den dissoziierten und konditionierten Stoff(en) (M) freigesetzte Energie vor ihrer Ionisierung in Form eines oder mehrerer Wertstoffe durch Kondensation vor der Ionisierung des oder der erzeugten Stoff(s) in dem oder den Sammelmitteln (24) für Kondensate gespeichert wird.

**45.** Anwendung des Verfahrens nach einem der Patentansprüche 40 bis 43 zur Erzeugung von thermischer Energie.

**46.** Anwendung des Verfahrens nach einem der Patentansprüche 40 bis 43 zur Erzeugung chemischer Energie.

**47.** Anwendung des Verfahrens nach einem der Patentansprüche 40 bis 43 zur Erzeugung mechanischer Energie.

**48.** Verbrennungsanlage insbesondere für Abfälle, die die Vorrichtung nach einem der Patentansprüche 1 bis 39 verwendet.

**49.** Ökologischer Verbrennungsmotor insbesondere für Fahrzeuge, der die Vorrichtung nach einem der Patentansprüche 2 bis 30 und 37 bis 39 verwendet.

**50.** Turbine, die die Vorrichtung nach einem der Patentansprüche 1 bis 30 und 33 verwendet.

**51.** Staustrahltriebwerk, das die Vorrichtung nach einem der Patentansprüche 1 bis 29 und 36 verwendet.

**52.** Öfen und Heizkessel für Haushalte, die die Vorrichtung nach einem der Patentansprüche 1 bis 32 verwenden.

Fig. 1

EP 1 321 014 B1

Fig.2

Fig. 3

Fig. 4

Fig_5

EP 1 321 014 B1

Fig. 6

EP 1 321 014 B1

Fig. 7

EP 1 321 014 B1

Fig. 8

Fig. 9

Fig. 10

Fig. 11

EP 1 321 014 B1

46

Fig_12

**EP 1 321 014 B1**

## RÉFÉRENCES CITÉES DANS LA DESCRIPTION

**Documents brevets cités dans la description**

- WO 9623400 A2